# EUROPÄISCHE PATENTSCHRIFT

(11) **EP 2 188 062 B1**
(45) Veröffentlichungstag und Bekanntmachung des Hinweises auf die Patenterteilung: **17.08.2011**
(21) Anmeldenummer: 08803082.0
(22) Anmeldetag: 18.08.2008
(51) Int. Cl.: B05D 7/22, B08B 9/02

(54) **BESCHICHTUNGSVERFAHREN ZUR BESCHICHTUNG EINES INNEREN EINES ROHRLEITUNGSSYSTEMS, SOWIE SUBVERTEILER UND BEARBEITUNGSVORRICHTUNG ZUR BEARBEITUNG EINES ROHRLEITUNGSSYSTEMS**
COATING METHOD FOR COATING AN INTERIOR OF A PIPELINE SYSTEM, AND SUBDISTRIBUTOR AND PROCESSING DEVICE FOR PROCESSING A PIPELINE SYSTEM
PROCÉDÉ DE REVÊTEMENT POUR L'APPLICATION D'UN REVÊTEMENT À L'INTÉRIEUR D'UN RÉSEAU DE CONDUITES, AINSI QUE SOUS-DISTRIBUTEUR ET DISPOSITIF DE TRAITEMENT POUR LE TRAITEMENT D'UN RÉSEAU DE CONDUITES

(43) Veröffentlichungstag der Anmeldung: 26.05.2010
(73) Patentinhaber: CEC-Systems SA, 8103 Unterengstringen (CH)
(72) Erfinder: OHANESSIAN, Roben, CH-8103 Unterengstringen (CH)
(74) Vertreter: Irsch, Manfred
(86) Internationale Anmeldenummer: PCT/EP2008/060795
(87) Internationale Veröffentlichungsnummer: WO 2010/020273

(56) Entgegenhaltungen:
- EP-A- 1 647 780
- WO-A-97/15406
- WO-A-2008/088317
- DE-A1- 3 902 366
- DE-A1- 19 745 642
- DE-C1- 19 513 150
- US-A1- 2004 110 450

## Beschreibung

Die Erfindung betrifft ein Beschichtungsverfahren zur Beschichtung eines Inneren eines Rohrleitungssystems, sowie einen Subverteiler und eine Bearbeitungsvorrichtung zur Bearbeitung eines Rohrleitungssystems gemäss dem Oberbegriff des unabhängigen Anspruchs der jeweiligen Kategorie.

Derartige Verfahren werden angewendet um z.B. rostende oder sonst wie korrodierende Wasserleitungen in Gebäuden zu Trocknen, mit Sandstrahlen zu entrosten und dann mit einer Schicht aus Epoxydharz oder sonst einer Kunststoffschicht zu beschichten.

Die Wasserleitungen in einem Gebäude sind meist in verschiedene Leitungsstränge aufgeteilt. Typisch ist beispielsweise der Leitungsstrang in einem Nassraum in einer Wohnung oder in einem Haus. Kaltwasserrohre bilden einen ersten Rohrstrang und führen zu Toilette, Badwanne, Waschtisch und Dusche. Warmwasserrohre zu Waschtisch, Bad und Dusche bilden einen zweiten Rohrstrang. Der Warmwasserstrang wird vom Warmwasserboiler gespeist. Auch die Rohre, die den Warmwasserstrang bilden können korrodieren und rosten. Weitere Rohrstränge in Häusern und Wohnungen gibt es in der Küche und in der Waschküche, werden durch Heizungsrohrsysteme gebildet usw..

Die häufigste Anwendung bekannter Bearbeitungsverfahren ist heute das Beschichten der Kaltwasser- Rohre und - Rohrstränge in Gebäuden. Ein solches Sanierungsverfahren Ist zum Beispiel aus der US 2004/110450 bekannt Bei diesem Verfahrens wird das Rohrsystem gereinigt, getrocknet und sandgestrahlt. Das Sandstrahlen erfolgt durch den Anschluss von Überdruck- bzw. Unterdruck an entgegen gesetzten Rohrsystem-Enden. Durch alternieren des Druckgefälles wird das Partikelmaterial mit wechselnder Richtung durch das Rohrsystem gespült. Auf dieselbe Art und Weise erfolgt nach der Reinigung eine Beschichtung mit EpoxidHarz. Ein wesentlicher Nachteil dieses Verfahrens Ist, dass zur vollständigen Sanierung aller Subsysteme des Rohrsystems die Sanierungsvorrichtung jeweils immer auf die verschiedenen Subsysteme umgebaut werden muss. Ein anderes Verfahren ist in der DE 39 02 366 A1 gezeigt, dass eine Vorrichtung zum Vorwärts- und Rückwärtsspülen in Rohrleitungssystemen bei gleichzeitiger Wasseraufbereitung vorschlägt. In der DE 195 13 150 C1 wird dagegen ein Sanierungsverfahren vorgeschlagen, bei welchem das Rohrleitungssystem vor dem Beschichten mit einer Säure gereinigt wird.

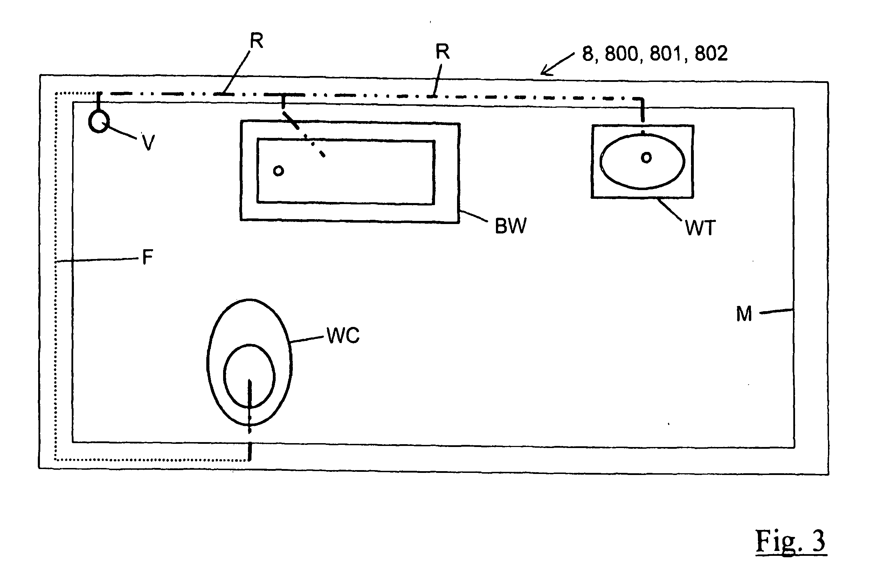

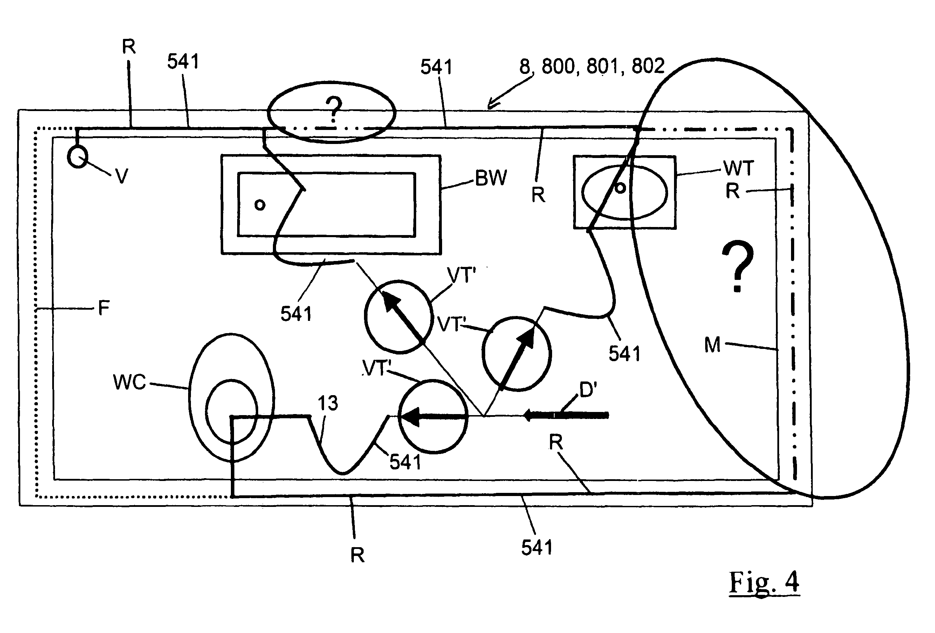

Ein Problem für das Beschichten besteht bei Gebäuden häufig darin, dass keine Pläne für das Sanitär-Leitungssystem existieren. Und wenn solche Pläne existieren, sind die Rohre oft anders als auf den Plänen angegeben verlegt. Bei den bisher bekannten Beschichtungsverfahren kann dies zur Folge haben, dass Rohrabschnitte nicht beschichtet sind. Dieses Problem wird später anhand der Fig. 3 und Fig. 4 noch näher beleuchtet. Bei bekannten Verfahren wird bei jedem Anschlussrohr z.B. den drei Rohren für Toilette, Waschtisch und Badewanne gleichzeitig das noch flüssige Beschichtungsmittel in den Rohrstrang eingeblasen. Es wird dabei bei jedem Anschlussrohr eine solche Menge Beschichtungsmittel eingeblasen, die aufgrund der Pläne aus der Länge und dem Durchmesser der Rohre bestimmt wurde.

Wenn die effektive Länge der Rohre der aus den Plänen ermittelten Länge entspricht, kann davon ausgegangen werden, dass die Beschichtung vollständig ist. Es kommt aber vor, dass die verwendeten Rohre einen ganz oder auch nur streckenweise grösseren innendurchmesser aufweisen als angenommen wurde, so dass die berechnete Menge Beschichtungsmittel zu klein ist und eine grössere Menge Beschichtungsmittel erforderlich wäre für die vollständige Beschichtung.

Auch der umgekehrte Fall kommt in der Praxis vor, nämlich dass die Menge an Epoxidharz zu gross berechnet wurde, weil die Rohre ganz oder streckenweise dünner als vermutet sind, oder die Rohrlänge tatsächlich kürzer ist als angenommen, was dazu führt, dass in einen bestimmten Rohrabschnitt zu viel Beschichtungsmaterial eingeblasen wird, so dass die Innenwand des Rohrs zu dick beschichtet wird, oder im Extremfall das Rohr vom Beschichtungsmaterial sogar verstopft wird.

Es besteht mit den bisherigen Verfahren keine Möglichkeit festzustellen, ob der Rohrstrang vollständig mit Beschichtungsmittel beschichtet ist bzw. ob die Dicke der Beschichtung den vorgegebenen Sollwert hat.

Aber auch bereits bei den Vorbereitungsverfahren die dem eigentlichen Beschichtungsvorgang in der Regel vorgeschaltet werden müssen, haben die aus dem Stand der Technik bisher nicht behobene Mängel.

So muss meist in einem ersten Schritt das Rohrleitungssystem komplett entwässert und getrocknet werden. Bei den bisher bekannten Verfahren wird, nachdem das in den Rohren befindliche Wasser an einem tiefsten Punkt abgelassen wurde, einfach an einer oder mehreren Zugangsstellen des Rohrleitungssystems warme Luft für eine bestimmte Zeitdauer eingeblasen. Sehr häufig, vor allem dann wenn das Rohrleitungssystem viele Biegungen hat, wird dabei jedoch nicht alles Wasser entfernt, da sich das Wasser in den Biegungen des Rohrleitungssystems festsetzt und nicht ausgeblasen wird.

Ganz verwandte Probleme ergeben sich beim anschliessenden Sandstrahlen des Rohrteitungssystems. Auch hier werden häufig gerade die Biegungen nur ungenügend durch das Sandstrahlen gereinigt oder an kritischen Stellen gar nicht erreicht. Auch müssen die bekannten Verfahren mit hohen Strahldrücken arbeiten, insbesondere um die Probleme an den Biegungen in den Griff zu bekommen, was nicht selten bei dünnen oder bereits stark abgenutzten Rohren dazu führt, dass die Rohre an den Biegungen von dem Sandstrahl geradezu durchgeschossen werden, was unweigerlich dazu führt, dass das Mauerwerk in dem die Rohre verlegt sind, aufgebrochen werden muss und die alten Roher durch neue ersetzt werden müssen, was durch das Beschichten ja gerade vermieden werden soll. Ähnlich Probleme wie beim zuvor beschrieben Entleeren des Rohrleitungssystems treten konsequenterweise auch beim Entstauben des Rohrleitungssystems auf, das nach dem Sandstrahlen und vor dem Beschichten durchgeführt werden muss.

Eine Aufgabe der Erfindung ist es daher, ein verbessertes Beschichtungsverfahren vorzuschlagen, mit welchem nachprüfbar sichergestellt werden kann, das alle Teile des zu beschichtenden Rohrleitungssystems in der vorgegebenen Dicke beschichtet werden. Darüber hinaus ist es eine Aufgabe der Erfindung eine Vorrichtung bereitzustellen, mit welcher das Bearbeitungsverfahren und das Beschichtungsverfahren zuverlässig kostengünstig und einfach, möglichst sogar vollständig automatisiert durchgeführt werden kann.

Die diese Aufgaben lösenden Gegenstände der Erfindung sind durch die Merkmale des unabhängigen Anspruchs der jeweiligen Kategorie gekennzeichnet.

Die jeweiligen abhängigen Ansprüche beziehen sich auf besonders vorteilhafte Ausführungsformen der Erfindung.

Auch wenn die Erfindung sich primär auf ein Beschichtungsverfahren zur Beschichtung eines Inneren eines Rohrleitungssystems bezieht, soll im Rahmen dieser Anmeldung dennoch auch ein Bearbeitungsverfahren beschrieben werden, das besonders vorteilhaft mit dem erfindungsgemässen Beschichtungsverfahren kombinierbar ist und insbesondere ebenfalls mit dem später noch zu beschreibenden erfindungsgemässen Subverteiler sowie der Bearbeitungsvorrichtung mit Subverteiler durchgeführt werden kann.

Somit soll aus Gründen der Übersichtlichkeit zunächst ein Bearbeitungsverfahren zur Bearbeitung eines Inneren eines Rohrleitungssystems beschrieben werden, welches Rohrleitungssystem ein Teilsystem zwischen einem ersten Anschluss und einem zweiten Anschluss umfasst, wobei das Bearbeitungsverfahren die folgenden Bearbeitungsschritte umfasst: Bereitstellung eines ersten Arbeitmediums, welches in Bezug auf einen Umgebungsdruck unter einem Überdruck steht. Bereitstellung eines zweiten Arbeitsmediums, welches in Bezug auf den Umgebungsdruck unter einem Unterdruck steht. Dabei wird das Teilsystem zwischen dem ersten Anschluss und dem zweiten Anschluss gleichzeitig mit dem unter Überdruck stehenden ersten Arbeitsmedium und dem unter dem Unterdruck stehenden zweiten Arbeitsmedium derart beaufschlagt wird, dass zwischen dem ersten Anschluss des Teilsystems und dem zweiten Anschluss des Teilsystems in einer Richtung ein Fluidstrom des unter dem Überdruck stehenden ersten Arbeitsmediums zu dem unter dem Unterdruck stehenden zweiten Arbeitsmedium durch das Teilsystem generiert wird. Vorteilhaft wird in mindestens einem Bearbeitungsschritt die Richtung des Fluidstroms durch das Teilsystem zwischen dem ersten Anschluss und dem zweiten Anschluss mindestens einmal umgekehrt wird.

Wesentlich für das neue bevorzugte Arbeitsverfahren ist es somit, dass in mindestens einem Bearbeitungsschritt die Richtung des Fluidstroms durch das Teilsystem zwischen dem ersten Anschluss und dem zweiten Anschluss mindestens einmal umgekehrt wird. Dadurch ist einerseits eine zuverlässige Entleerung, Trocknung und Entstaubung des zu sanierenden Rohrsystems erstmals möglich, da insbesondere auch die Rückstände aus den Biegungen zuverlässig entfernt werden können. Darüber hinaus ist vor allem auch der Strahlprozess deutlich schonender, da in beide Richtungen gestrahlt wird, so dass im Vergleich zum Stand der Technik mit kleineren Strahldruck gearbeitet werden kann und trotzdem die Biegungen des Rohrsystems zuverlässig gereinigt werden.

Im speziellen ist das Rohrleitungssystem ein vernetztes Rohrleitungssystem mit mindestens zwei, bevorzugt über eine Vernetzungsleitung, insbesondere Steigrohr oder Fallrohr, miteinander vernetzten Subsystemen, die bevorzugt jeweils mindestens ein Teilsystem umfassen, wobei das Subsystem mindestens ein mit einem ersten Teilsystem gekoppeltes zweites Teilsystem umfasst.

in der Praxis wird das Rohrleitungssystem häufig eine Vielzahl von Subsystemen umfassen, die bevorzugt in einer Vielzahl von Etagen eines Gebäudes ausgebildet sind.

Bevorzugt wird dabei für jedes Subsystem ein Hauptverteiler vorgesehen, welcher Hauptverteiler das erste Arbeitsmedium und / oder das zweite Arbeitsmedium dem zugeordneten Subsystem zur Verfügung stellt, und der Hauptverteiler insbesondere ein Treppenhausluftverteiler ist.

Dabei ist innerhalb jedes Subsystems ein Subverteiler vorgesehen, welcher Subverteiler das erste Arbeitmedium und / oder das zweite Arbeitsmedium dem Teilsystem des Subsystems zur Verfügung stellt, wobei der Subverteiler insbesondere ein Nasszellenluftverteiler ist und / oder der Subverteiler bevorzugt derart ausgestaltet ist, dass an einem Auslass des Subverteilers wahlweise und umschaltbar das erste Arbeitsmedium oder das zweite Arbeitsmedium bereit gestellt werden kann, wobei das erste Arbeitmedium und / oder das zweite Arbeitsmedium bevorzugt über den Hauptverteiler dem Subverteiler zur Verfügung gestellt wird.

In der Praxis wird das unter Überdruck stehende erste Arbeitsmedium von einem Kompressor, speziellen Fällen wo eine Kompressor nicht eingesetzt werden kann, von einem Überdruckspeicher bereitgestellt und / oder das unter dem Unterdruck stehende zweite Arbeitsmedium von einer Absaugmaschine oder einem Unterdruckspeicher bereitgestellt wird. Auch wenn in der Praxis das erste Arbeitsmedium und das zweite Arbeitsmedium allein schon aus Kostengründen einfach Luft ist, kann in speziellen Fällen auch ein Gas, zum Beispiel Sauerstoff oder Stickstoff, oder ein Inertgas, wie zum Beispiel ein Edelgas, oder ein organisches Gas, beispielsweise um organische Rückstände im Rohrleitungssystem aufzulösen, zur Anwendung kommen.

Vorteilhaft wird eine Luftregelstation zur Einstellung und / oder Regulierung des Überdrucks vorgesehen und / oder es wird ein Wasserabscheider und / oder ein Zyklonabscheider zur Abscheidung eines Fluids, insbesondere von Wasser, einem Öl, einem Epoxidharz und / oder zur Abscheidung von Partikeln, insbesondere von abrasiven Teilchen, im speziellen von Sand, und oder einem anderen umweltverträglichen oder nicht umweltverträglichen Material vorgesehen.

Das zu sanierende Rohrleitungssystem kann dabei im Prinzip jedes beliebige Rohrleitungssystem sein, zum Beispiel, aber nicht nur ein Rohrleitungssystem eines Gebäudes, insbesondere ein Kaltwasserleitungssystem, ein Warmwasserleitungssystem, ein Zirkulationsleitungssystem, ein Heizungsleitungssystem, insbesondere ein Fussbodenheizungssystem, ein Gasleitungssystem, ein Abwasserleitungssystem, ein Dachwasserleitungssystem, ein Schwimmbadleitungssystem, ein Druckluftleitungssystem, ein Ölverteilungssystem, und oder das Rohrleitungssystem kann ein Industrieleitungssystem, insbesondere ein Rohrleitungssystem für Abwasser, Gas, Öl, Erdöl, Rohöl, Dieselöl, Benzin, Chemikalien, oder andere Industriegase, Industrieflüssigkeiten oder Industriefeststoffe sein und / oder das Rohrleitungssystem kann ein öffentliches Leitungssystem zur Leitung eines der vorstehenden Fluide, anderer Fluide oder Feststoffe sein.

Zur effizienten Durchführung des neuen vorteilhaften Bearbeitungsverfahrens wird vor einem Start des Bearbeitungsverfahrens das gesamte Rohrleitungssystem mindestens mit allen Hauptverteilern, und / oder mit allen Subverteilern und / oder mit allen Luftregelstationen und / oder mit allen Wasserabscheidern und / oder mit allen Zyklonabscheidern vernetzt. Besonders effizient lässt sich das Bearbeitungsverfahren dadurch gestalten, dass eine elektronische Datenverarbeitungsanlage vorgesehen wird und mindestens ein Teil der Hauptverteiler und / oder der Subverteiler und / oder der Luftregelstationen und / oder der Wasserabscheider und / oder der Zyklonabscheider derart ausgestaltet ist, dass das Bearbeitungsverfahren zumindest teilweise automatisch und / oder programmgesteuert durchgeführt werden kann.

In einem speziellen Ausführungsbeispiel ist das neue Bearbeitungsverfahren ein Vorbereitungsverfahren zur Entleerung und / oder Austrocknung des Rohrleitungssystems, welches Vorbereitungsverfahren die folgenden Schritte umfasst: Bereitstellung eines ersten Vorbereitungsmedium, insbesondere Luft, welches erste Vorbereitungsmedium in Bezug auf den Umgebungsdruck unter dem Vorbereitungsüberdruck steht. Bereitstellung eines zweiten Vorbereitungsmediums, insbesondere Luft, welches zweite Vorbereitungsmedium in Bezug auf den Umgebungsdruck unter dem Vorbereitungsunterdruck steht. Dabei wird das Teilsystem in einem ersten Vorbereitungsschritt über den ersten Anschluss mit dem unter dem Vorbereitungsüberdruck stehenden ersten Vorbereitungsmedium und über den zweiten Anschluss gleichzeitig mit dem unter Vorbereitungsunterdruck stehenden zweiten Vorbereitungsmedium derart beaufschlagt, dass zwischen dem ersten Anschluss des Teilsystems und dem zweiten Anschluss des Teilsystems in Richtung vom ersten Anschluss zum zweiten Anschluss ein Fluidstrom des ersten Vorbereitungsmediums derart durch das Teilsystem generiert wird, dass das Teilsystem von einem Prozessstoff, insbesondere von Wasser vor-entleert wird. In einem zweiten Vorbereitungsschritt wird das Teilsystem über den ersten Anschluss mit dem unter dem Vorbereitungsunterdruck stehenden zweiten Vorbereitungsmedium und über den zweiten Anschluss gleichzeitig mit dem unter dem Vorbereitungsüberdruck stehenden ersten Vorbereitungsmedium derart beaufschlagt wird, dass die Richtung des Fluidstroms durch das Teilsystem zwischen dem ersten Anschluss und dem zweiten Anschluss umgekehrt wird, so dass das Teilsystem von einem noch verbleibenden Rest des Prozessstoffes nach-entleert wird.

Bevorzugt wird dabei, während im ersten Teilsystem der erste Vorbereitungsschritt und der zweite Vorbereitungsschritt durchgeführt wird, mindestens ein Anschluss des zweiten Teilsystems vom ersten Vorbereitungsmedium und vom zweiten Vorbereitungsmedium abgekoppelt.

In der Praxis wird dabei häufig das zweite Teilsystem nach dem ersten Teilsystem zunächst vor-entleert und anschliessend nach-entleert wird.

Zum Ausblasen des Teilsystems nach der Vor-Entleerung und der Nach-Entleerung des Teilsystems werden vorteilhaft alle Anschlüsse aller Teilsysteme des Subsystems für eine vorgegebene Ausblasdauer mit dem unter dem Überdruck stehenden ersten Vorbereitungsmedium beaufschlagt.

Oft werden mindestens zwei gekoppelte Subsysteme vorgesehen, die über die Vernetzungsleitung miteinander gekoppelt sind, und die Vernetzungsleitung und die Subsysteme, die nacheinander vor-entleert und nach-entleert werden, werden anschliessend für die vorgegebene Ausblasdauer mit dem Vorbereitungsmedium beaufschlagt und ausgeblasen.

Nach der Entleerung des kompletten Rohrleitungssystems sollte das Rohrleitungssystem zur Trocknung für eine vorgegebene Auswärmdauer mit einem erhitzen Ausheizmedium, insbesondere mit Warmluft, bei einer vorgegebenen Temperatur, bevorzugt bei mehr als 37° für ca. 45 min ausgeheizt werden.

In einem weiteren bevorzugten Ausführungsbeispiel ist das erfindungsgemässe Bearbeitungsverfahren ein Strahlverfahren, insbesondere ein mechanisch abrasives Strahlverfahren, bevorzugt ein Sandstrahlverfahren zum Strahlen des Rohrleitungssystems ist, welches Strahlverfahren die folgenden Schritte umfasst: Bereitstellung eines ersten Strahlmediums umfassend ein Strahlmittel, insbesondere Sand-Luft Gemisch mit Sand, welches erste Strahlmedium in Bezug auf den Umgebungsdruck unter dem Strahlüberdruck steht. Bereitstellung eines zweiten Strahlmediums, insbesondere Luft, welches zweite Strahlmedium in Bezug auf den Umgebungsdruck unter dem Strahlunterdruck steht, wobei das Teilsystem in einem ersten Strahlschritt über den ersten Anschluss mit dem unter dem Strahlüberdruck stehenden ersten Strahlmedium und über den zweiten Anschluss gleichzeitig mit dem unter dem Strahlunterdruck stehenden zweiten Strahlmedium derart beaufschlagt wird, dass zwischen dem ersten Anschluss des Teilsystems und dem zweiten Anschluss des Teilsystems in Richtung vom ersten Anschluss zum zweiten Anschluss ein Fluidstrom des ersten Strahlmediums derart durch das Teilsystem generiert wird, dass eine Innenwand des Teilsystem vor-gestrahlt wird und in einem zweiten Strahlschritt das Teilsystem über den ersten Anschluss mit dem unter dem Strahlunterdruck stehenden zweiten Strahlmedium und über den zweiten Anschluss gleichzeitig mit dem unter dem Strahlüberdruck stehenden ersten Strahlmedium derart beaufschlagt wird, dass die Richtung des Fluidstroms durch das Teilsystem zwischen dem ersten Anschluss und dem zweiten Anschluss umgekehrt wird, so dass das Teilsystem nacheinander in zwei entgegen gesetzte Richtungen mit dem Strahlmittel zunächst vor-gestrahlt und dann nach-gestrahlt wird.

Das Strahlen kann zum Beispiel zur Reinigung von Kupferrohren bevorzugt mit abrasiven Teilchen, im Speziellen mit Sand mit einer Korngrösse von 0.1 mm bis 0.3mm durchgeführt. Galvanisierte Rohren können vorteilhaft mit abrasiven Teilchen, bevorzugt Sand mit einer Korngrösse von 1mm bis 2.3mm durchgeführt, während beispielsweise Ablaufrohre mit abrasiven Teilchen, bevorzugt Sand mit einer Korngrösse von 3mm bis 5mm gestrahlt werden können.

Während im ersten Teilsystem der erste Strahlschritt und der zweite Strahlschritt durchgeführt wird, wird bevorzugt mindestens ein Anschluss des zweiten Teilsystems vom ersten Strahlmedium und vom zweiten Strahlmedium abgekoppelt, wobei das zweite Teilsystem beispielsweise nach dem ersten Teilsystem zunächst vor-gestrahlt und anschliessend nach-gestrahlt wird.

Meist werden mindestens zwei gekoppelte Subsysteme vorgesehen, die über die Vernetzungsleitung miteinander gekoppelt sind, und nach dem Strahlen aller Teilsysteme des ersten Subsystems wird zunächst die Vernetzungsleitung gestrahlt und danach das weitere Subsystem gestrahlt.

Nach dem Strahlen des Rohrleitungssystems wird zu dessen Entstaubung ein

Entstaubungsverfahren umfassend die folgenden Schritte vorteilhaft verwendet: Bereitstellung eines ersten Entstaubungsmediums, insbesondere Luft, welches erste Entstaubungsmedium in Bezug auf den Umgebungsdruck unter einem Entstaubungsüberdruck steht. Bereitstellung eines zweiten Entstaubungsmediums, insbesondere Luft, welches zweite Entstaubungsmedium in Bezug auf den Umgebungsdruck unter einem Entstaubungsunterdruck steht. Dabei wird das Teilsystem in einem ersten Entstaubungsschritt über den ersten Anschluss mit dem unter dem Entstaubungsüberdruck stehenden ersten Entstaubungsmedium und über den zweiten Anschluss gleichzeitig mit dem unter Entstaubungsunterdruck stehenden zweiten Entstaubungsmedium derart beaufschlagt, dass zwischen dem ersten Anschluss des Teilsystems und dem zweiten Anschluss des Teilsystems in Richtung vom ersten Anschluss zum zweiten Anschluss ein Fluidstrom des ersten Entstaubungsmediums derart durch das Teilsystem generiert wird, dass das Teilsystem vom Strahlmittel, insbesondere von Sand vor-entstaubt wird. Und in einem zweiten Entstaubungsschritt das Teilsystem über den ersten Anschluss mit dem unter dem Entstaubungsunterdruck stehenden zweiten Entstaubungsmedium und über den zweiten Anschluss gleichzeitig mit dem unter dem Entstaubungsüberdruck stehenden ersten Entstaubungsmedium derart beaufschlagt wird, dass die Richtung des Fluidstroms durch das Teilsystem zwischen dem ersten Anschluss und dem zweiten Anschluss umgekehrt wird, so dass das Teilsystem von einem noch verbleibenden Rest des Strahlmittels nach-entstaubt wird.

Bevorzugt wird während im ersten Teilsystem der erste Entstaubungsschritt und der zweite Entstaubungsschritt durchgeführt wird, mindestens ein Anschluss des zweiten Teilsystems vom ersten Entstaubungsmedium und vom zweiten Entstaubungsmedium abgekoppelt, wobei im Speziellen das zweite Teilsystem nach dem ersten Teilsystem zunächst vor-entstaubt und anschliessend nach-entstaubt wird.

Bevorzugt werden zum Entstauben des Teilsystems nach der Vor-Entstaubung und der Nach-Entstaubung des Teilsystems alle Anschlüsse aller Teilsysteme des Subsystems für eine vorgegebene Ausblasdauer mit dem unter dem Überdruck stehenden ersten Entstaubungsmedium beaufschlagt werden.

Die mindestens zwei gekoppelte Subsysteme, die über die Vernetzungsleitung miteinander gekoppelt sind, und die nacheinander vor-entstaubt und nach-entstaubt werden, werden anschliessend für die vorgegebene Ausblasdauer mit dem Entstaubungsmedium beaufschlagt und ausgeblasen.

Besonders vorteilhaft wird nach der Entstaubung des kompletten Rohrleitungssystems, das Rohrleitungssystem zur Aufheizung für eine vorgegebene Auswärmdauer mit einem erhitzen Ausheizmedium, insbesondere mit Warmluft, bei einer vorgegebenen Temperatur, bevorzugt bei mehr als 37° für ca. 45 min aufgeheizt wird und / oder das Rohrleitungssystem wird während dem ersten Entstaubungsschritt und / oder dem zweiten Entstaubungsschritt durch das erste Entstaubungsmedium, das auf eine vorgegebene Temperatur erhitzt ist, entstaubt und aufgeheizt.

Die Erfindung selbst betrifft also ein Beschichtungsverfahren zur Beschichtung eines Inneren eines Rohrleitungssystems mit einem Beschichtungsmaterial, bevorzugt zur Beschichtung mit einem Epoxidharz, welches Rohrleitungssystem ein Teilsystem zwischen einem ersten Anschluss und einem zweiten Anschluss umfasst, wobei das Beschichtungsverfahren in einem ersten Verfahrensschritt die folgenden Schritte in beliebiger Reihenfolge umfasst: Bereitstellung eines ersten Druckfluids, insbesondere Luft, welches erste Druckfluid in Bezug auf einen Umgebungsdruck unter einem Beschichtungsüberdruck steht. Bereitstellung eines zweiten Druckfluids, insbesondere Luft, welches zweite Druckfluid in Bezug auf den Umgebungsdruck unter einem Beschichtungsunterdruck steht. Bereitstellung des Beschichtungsmaterials in einem Vorratsbehälter, insbesondere Vorratsschlauch. Verbinden eines Druckausgangs des Vorratsbehälters mit dem ersten Anschlusses des ersten Teilsystems. Verbinden eines Druckeingangs des Vorratsbehälters mit dem unter dem Beschichtungsüberdruck stehenden ersten Druckfluid. Verbinden des zweiten Anschlusses des ersten Teilsystems mit dem unter dem Beschichtungsunterdruck stehenden zweiten Druckfluid. In einem zweiten Verfahrensschritt wird das erste Teilsystem über den ersten Anschluss des ersten Teilsystems mit dem unter dem Beschichtungsüberdruck stehenden ersten Druckfluid und über den zweiten Anschluss des ersten Teilsystems gleichzeitig mit dem unter dem Beschichtungsunterdruck stehenden zweiten Druckfluid derart mit einem Differenzdruck beaufschlagt, dass zwischen dem ersten Anschluss des ersten Teilsystems und dem zweiten Anschluss des ersten Teilsystems in Richtung vom ersten Anschluss zum zweiten Anschluss ein Fluidstrom aus dem Beschichtungsmaterial und dem ersten Druckfluid derart durch das erste Teilsystem generiert wird, dass eine Innenwand des Teilsystems mit dem Beschichtungsmaterial beschichtet wird. Erfindungsgemäss wird, nachdem ein Austritt des Beschichtungsmaterials aus dem zweiten Anschluss des ersten Teilsystems an einem Kontrollpunkt detektiert wird, der zweite Anschluss des ersten Teilsystems mit dem unter dem Beschichtungsüberdruck stehenden ersten Druckfluid beaufschlagt.

In der Praxis ist das Rohrleitungssystem häufig ein vernetztes Rohrleitungssystem mit mindestens zwei, bevorzugt über eine Vernetzungsleitung, insbesondere Steigrohr oder Fallrohr, miteinander vernetzten Subsystemen, die bevorzugt jeweils mindestens ein Teilsystem umfassen.

Das Subsystem kann mindestens ein mit dem ersten Teilsystem gekoppeltes zweites Teilsystem umfassen, wobei über einen ersten Anschluss des zweiten Teilsystems und einen zweiten Anschluss des zweiten Teilsystems, das Teilsystem mit einer Druckdifferenz beaufschlagbar ist, und der erste Anschluss des zweiten Teilsystems identisch mit dem zweiten Anschluss des ersten Teilsystems ist.

Besonders bevorzugt wird das Beschichtungsmittel den Teilsystemen eines gegebenen Subsystems an demjenigen Anschluss des Subsystems in das Subsystem eingespeist, welcher Anschluss am weitesten von einer dem Subsystem zugeordneten Vernetzungsleitung entfernt ist.

Nach einer Entstaubung des kompletten Rohrleitungssystems kann das Rohrleitungssystem zur Aufheizung für eine vorgegebene Auswärmdauer mit einem erhitzen Ausheizmedium, insbesondere mit Warmluft, bei einer vorgegebenen Temperatur, bevorzugt bei mehr als 37° für ca. 45 min aufgeheizt werden und / oder das Rohrleitungssystem kann in einem Entstaubungsverfahren und / oder in einem Vorbereitungsverfahren von einem Entstaubungsmedium, insbesondere Warmluft, und / oder von einem Vorbereitungsmedium, insbesondere Warmluft, auf die vorgegebene Temperatur aufgeheizt wird.

In einem speziellen Ausführungsbeispiel wird der zweite Anschluss des zweiten Teilsystems mit dem unter dem Beschichtungsunterdruck stehenden zweiten Druckfluid solange beaufschlagt, bis ein Austritt des Beschichtungsmaterials aus dem zweiten Anschluss des zweiten Teilsystems detektiert wird, und danach wird der zweite Anschluss des zweiten Teilsystems mit dem unter dem Beschichtungsüberdruck stehenden ersten Druckfluid beaufschlagt.

Nach dem Beschichten aller Teilsysteme eines ersten Subsystems werden bevorzugt alle Anschlüsse mit dem unter dem Beschichtungsüberdruck stehenden ersten Druckfluid beaufschlagt und die mit dem Subsystem verbundene Vernetzungsleitung, die bevorzugt mit dem unter dem Beschichtungsunterdruck stehenden zweiten Druckfluid an einer Saugseite beaufschlagt wird, wird mindestens so lange beschichtet, bis ein Austritt des Beschichtungsmaterials aus der Vernetzungsleitung an einem Kontrollpunkt detektiert wird. In der Praxis ist erste Subsystem oft über die Vernetzungsleitung mit einem weiteren Subsystem verbunden, in welchem weiteren Subsystem alle Anschlüsse des weiteren Subsystems mit dem unter dem Beschichtungsunterdruck stehenden zweiten Druckfluid beaufschlagt werden, und die Vernetzungsleitung solange beschichtet wird, bis an einem Kontrollpunkt ein Austritt des Beschichtungsmaterials aus einem zweiten Anschluss eines Teilsystems des weiteren Subsystems detektiert wird.

Das weitere Subsystem kann dann gemäss einem zuvor geschilderten Verfahren beschichtet werden.

Im speziellen kann ein Detektionsmittel zur Detektion des Austritts des Beschichtungsmaterials vorgesehen werden und das Detektionsmittel ist bevorzugt ein transparenter Schlauch und / oder ein Detektionssensor, insbesondere ein optischer, akustischer oder ein elektromagnetischer Detektionssensor.

Selbstverständlich kann Rohrleitungssystem in der Praxis eine Vielzahl von Subsystemen umfassen, die bevorzugt in einer Vielzahl von Etagen eines Gebäudes ausgebildet sind. Dabei kann für jedes Subsystem ein Hauptverteiler vorgesehen sein, welcher Hauptverteiler das erste Druckfluid und / oder das zweite Druckfluid dem zugeordneten Subsystem zur Verfügung stellt, und der Hauptverteiler insbesondere ein Treppenhausluftverteiler ist. Bevorzugt wird innerhalb jedes Subsystems ein Subverteiler vorgesehen, welcher Subverteiler das erste Druckfluid und / oder das zweite Druckfluid dem Teilsystem des Subsystems zur Verfügung stellt, wobei der Subverteiler insbesondere ein Nasszellenluftverteiler ist und / oder der Subverteiler bevorzugt derart ausgestaltet ist, dass an einem Auslass des Subverteilers wahlweise und / oder umschaltbar das erste Druckfluid oder das zweite Druckfluid bereit gestellt werden kann.

In der Regel, aber nicht zwingend, wird das erste Druckfluid und / oder das zweite Druckfluid über den Hauptverteiler dem Subverteiler zur Verfügung gestellt.

Das unter Beschichtungsüberdruck stehende erste Druckfluid wird von einem Kompressor oder einem Überdruckspeicher bereitgestellt wird, wobei das unter dem Beschichtungsunterdruck stehende zweite Druckfluid bevorzugt von einer Absaugmaschine oder einem Unterdruckspeicher bereitgestellt wird.

Vorteilhaft wird eine Luftregelstation zur Einstellung und / oder Regulierung des Beschichtungsüberdrucks vorgesehen und / oder es wird ein Wasserabscheider und / oder ein Zyklonabscheider zur Abscheidung eines Fluids, insbesondere von Wasser, einem Öl, einem Epoxidharz und / oder zur Abscheidung von Partikeln, insbesondere von abrasiven Teilchen, im speziellen von Sand, und oder einem anderen umweltverträglichen oder nicht umweltverträglichen Material vorgesehen.

Das Rohrleitungssystem kann dabei unter anderem ein Rohrleitungssystem eines Gebäudes sein, insbesondere ein Kaltwasserleitungssystem, ein Warmwasserleitungssystem, ein Zirkulationsleitungssystem, ein Heizungsleitungssystem, insbesondere ein Fussbodenheizungssystem, ein Gasleitungssystem, ein Abwasserleitungssystem, ein Dachwasserleitungssystem, ein Schwimmbadleitungssystem, ein Druckluftleitungssystem, ein Ölverteilungssystem, oder das Rohrleitungssystem kann ein Industrieleitungssystem sein, insbesondere ein Rohrleitungssystem für Abwasser, Gas, Öl, Erdöl, Rohöl, Dieselöl, Benzin, Chemikalien, oder andere Industriegase, Industrieflüssigkeiten oder Industriefeststoffe sein, oder das Rohrleitungssystem ist ein öffentliches Leitungssystem zur Leitung eines der vorstehenden Fluide, anderer Fluide oder von Feststoffen.

Vorteilhaft wird vor einem Start des Beschichtungsverfahrens das gesamte Rohrleitungssystem mindestens mit allen Hauptverteilern, und / oder mit allen Subverteilern und / oder mit allen Luftregelstationen und / oder mit allen Wasserabscheidern und / oder mit allen Zyklonabscheidern vernetzt.

In der Praxis ist häufig zumindest ein Teil der Subsysteme auf verschiedenen übereinander angeordneten Etagen, insbesondere in einem Gebäude vorgesehen, und das Beschichtungsverfahren wird in der obersten Etage gestartet, wobei die Subsysteme nacheinander von der obersten Etage bis zur untersten Etage beschichtet werden.

Im Speziellen kann eine elektronische Datenverarbeitungsanlage vorgesehen werden, wobei mindestens ein Teil der Hauptverteiler und / oder der Subverteiler und / oder der Luftregelstationen und / oder der Wasserabscheidern und / oder der Zyklonabscheidern derart ausgestaltet ist, dass das Beschichtungsverfahren zumindest teilweise automatisch und / oder programmgesteuert durchgeführt werden kann.

Die Erfindung betrifft weiter ein Kombinationsverfahren, wobei in einem ersten Verfahrensschritt ein efindungsgemässes Vorbereitungsverfahren durchgeführt wird, und / oder ein erfindungsgemässes Strahlverfahren und / oder ein Entstaubungsverfahren durchgeführt wird, und / oder abschliessend ein Beschichtungsverfahren gemäss der vorliegenden Erfindung durchgeführt wird.

Die Erfindung betrifft des weiteren einen Subverteiler, insbesondere Nasszellenverteiler zur Durchführung eines der vorgängig beschriebenen Verfahren, wobei der Subverteiler folgende Komponenten umfasst: eine Überdruckkammer mit einem Überdruckeinlass zur Beaufschlagung der Überdruckkammer mit einem unter einem Überdruck stehenden ersten Arbeitsmedium. Eine Unterdruckkammer mit einem Unterdruckeinlass zur Beaufschlagung der Unterdruckkammer mit einem unter einem Unterdruck stehenden zweiten Arbeitsmedium. Einen Überdruckauslass zur Bereitstellung des ersten Arbeitsmediums an einem Anschluss eines Teilsystems in einem Subsystem. Einen Unterdruckauslass zur Bereitstellung des zweiten Arbeitsmediums an einem Anschluss des Teilsystems im Subsystems. Erfindungsgemäss ist eine Umschalteinrichtung vorgesehen, so dass eine mit dem Subverteiler verbundene Druckleitung mit dem ersten Arbeitsmedium und / oder mit dem zweiten Arbeitsmedium beaufschlagbar ist.

Bevorzugt ist der Überdruckauslass und der Unterdruckauslass über einen gemeinsamen Auslassstutzen verbunden.

Dabei kann der Überdruckeinlass und / oder der Unterdruckeinlass und / oder der Überdruckauslass und / oder der Unterdruckauslass jeweils separat mit einem Absperrmittel, insbesondere mit einem mechanischen Absperrhahn, im speziellen mit einem automatischen Ventil, bevorzugt mit einem elektrisch betätigbaren Ventil absperrbar ausgestattet sein.

Zur Bestimmung eines Betriebsparameters kann ein Sensormittel vorgesehen sein, z.B. zur Bestimmung einer Temperatur und / oder eines Drucks und / oder einer Schaltstellung eines Absperrmittels und / oder eines anderen Betriebsparameters des Subverteilers und / oder es kann ein Sensormittel zur Überwachung des ersten Arbeitsmediums und / oder des zweiten Arbeitsmedium am Subverteiler vorgesehen sein.

Insbesondere zur Automatisierung kann der Subverteiler derart ausgestaltet und mit elektrischen Anschlüssen versehen sein, dass ein Signal des Sensormittels in eine Steuerungsanlage einlesbar ist und / oder die Absperrmittel sind durch die Steuerungsanlage, bevorzugt automatisch und / oder programmgesteuert steuerbar und / oder regelbar. Darüber hinaus betrifft Bearbeitungsvorrichtung zur Bearbeitung eines Rohrleitungssystems umfassend einen oben beschriebenen Subverteiler zur Bereitstellung des unter dem Überdruck stehenden ersten Arbeitsmediums und des unter dem Unterdruck stehenden zweiten Arbeitsmediums an einem Anschluss eines Teilsystems in einem Subsystem. Bevorzugt wird bei der erfindungsgemässen Bearbeitungsvorrichtung das unter Überdruck stehende erste Arbeitsmedium von einem Kompressor oder einem Überdruckspeicher bereitgestellt und / oder das unter dem Unterdruck stehende zweite Arbeitsmedium wird von einer Absaugmaschine oder einem Unterdruckspeicher bereitgestellt.

Besonders vorteilhaft ist zur Bereitstellung des ersten Arbeitsmediums und / oder des zweiten Arbeitsmediums am Subverteiler, ein mit dem Subverteiler in Strömungsverbindung stehender Hauptverteiler, insbesondere ein Treppenhausluftverteiler vorgesehen, wobei der Hauptverteiler und / oder der Subverteiler von einer Luftregelstation zur Einstellung und oder Regulierung des Überdrucks des ersten Arbeitsmediums im Betriebszustand gespeist sein kann.

Allein schon aus Gründen des Umweltschutzes kann ein Wasserabscheider und / oder ein Zyklonabscheider zur Abscheidung eines Fluids, insbesondere von Wasser, einem Öl, einem Epoxidharz und / oder zur Abscheidung von Partikeln, insbesondere von abrasiven Teilchen, im speziellen von Sand, und oder einem anderen umweltverträglichen oder nicht umweltverträglichen Material vorgesehen sein, wobei der Wasserabscheider und / oder der Zyklonabscheider insbesondere zwischen der Absaugmaschine und / oder dem Unterdruckspeicher und dem Hauptverteiler und / oder dem Subverteiler vorgesehen sein kann.

Zur Automatisierung kann darüber hinaus am Kompressor und / oder am Überdruckspeicher und / oder an der Absaugmaschine und / oder am Unterdruckspeicher und / oder an der Luftregelstation und / oder am Wasserabscheider und / oder am Zyklonabscheider und / oder am Hauptverteiler und / oder am Subverteiler und / oder am Detektionsmittel zur Detektion des Austritts des Beschichtungsmaterials aus einem Anschluss des Teilsystems und / oder an einer Leitung des Rohrsystems, ein Sensor zur Überwachung eines Betriebsparameters, insbesondere zur Überwachung eines Drucks, oder einer Temperatur, vorgesehen sein. Ausserdem kann am Kompressor und / oder am Überdruckspeicher und / oder an der Absaugmaschine und / oder am Unterdruckspeicher und / oder an der Luftregelstation und / oder am Wasserabscheider und / oder am Zyklonabscheider und / oder am Hauptverteiler und / oder am Subverteiler und / oder am Detektionsmittel zur Detektion des Austritts des Beschichtungsmaterials aus einem Anschluss des Teilsystems und / oder an einer Leitung des Rohrsystems, eine automatisch, bevorzugt elektrisch betätigbares Ventil vorgesehen sein, so dass ein Fluidstrom durch das automatische Ventil automatisch generiert oder unterbrochen werden kann.

Vorteilhaft ist ausserdem eine Ansteuereinrichtung, bevorzugt umfassend eine elektronische Datenverarbeitungsanlage vorgesehen, so dass die Bearbeitungsvorrichtung zumindest teilweise vollständig automatisch und / oder programmgesteuert betreibbar ist.

Im folgenden wird die Erfindung an Hand der schematischen Zeichnung näher erläutert. Es zeigen:
- Fig. 1: eine einfache Kaltwasserinstallation im Überblick;
- Fig. 2: tatsächlicher Verlauf der Rohrleitungen der Kaltwasserinstallation gemäss Fig. 1 im Mauerwerk des Gebäudes;
- Fig. 3: falsch angenommener Verlauf der Rohrleitungen gemäss Fig. 2;
- Fig. 4: Fehler beim Beschichten durch Anwendung eines aus dem Stand der Technik bekannten Verfahrens;
- Fig. 5a-5i: ein neues Entleerungsverfahren;
- Fig. 6a-6j: ein neuer Sandstrahlprozess;
- Fig. 7a-7i: ein neuer Entstaubungsprozess;
- Fig. 8a-8n: ein erfindungsgemässes Beschichtungsverfahren;
- Fig. 9: eine Installation einer erfindungsgemässen Bearbeitungsvorrichtung im Überblick;
- Fig. 10: ein Nasszellenverteiler der vorliegenden Erfindung;
- Fig. 11: ein Schnitt durch den Nasszellenverteiler gemäss Fig. 10.

Zum besseren Verständnis der Erfindung wird im folgenden schematisch ein kompletter Sanierungsvorgang eines Rohrleitungssystems 1 anhand einer Kaltwasserinstallation 1 in einem Gebäude erläutert, in dem sich die Installation über vier Etagen erstreckt, nämlich über das Untergeschoss UG, das Erdgeschoss EG, das erste Obergeschoss 10G und das zweite Obergeschoss 20G.

Es versteht sich von selbst, dass die Erfindung keineswegs allein auf die Sanierung von Kaltwasserinstallationen 1 in drei Etagen umfassenden Gebäuden beschränkt ist, sondern sich auch zum Beispiel auf die Sanierung von allen möglichen anderen Rohrleitungssystemen 1 bezieht, wie beispielsweise auf ein Warmwasserleitungssystem 1, ein Zirkulationsleitungssystem 1, ein Heizungsleitungssystem 1, insbesondere ein Fussbodenheizungssystem 1, ein Gasleitungssystem 1, ein Abwasserleitungssystem 1, ein Dachwasserleitungssystem 1, ein Schwimmbadleitungssystem 1, ein Druckluftleitungssystem 1, ein Ölverteilungssystem 1, wobei das Rohrleitungssystem 1 ein Rohrleitungssystem in Gebäuden mit beliebig vielen Etagen sein kann, oder z.B. ein Industrieleitungssystem 1, insbesondere ein Rohrleitungssystem 1 für Abwasser, Gas, Öl, Erdöl, Rohöl, Dieselöl, Benzin, Chemikalien, oder andere Industriegase, IndustrieflQssigkeiten oder Industriefeststoffe ist und / oder wobei das Rohrieitungssystem 1 ein öffentliches Leitungssystem 1 zur Leitung eines der vorstehenden Fluide, anderer Fluide oder Feststoffe ist oder irgendein anderes zu sanierendes Rohrleistungssystem 1 ist.

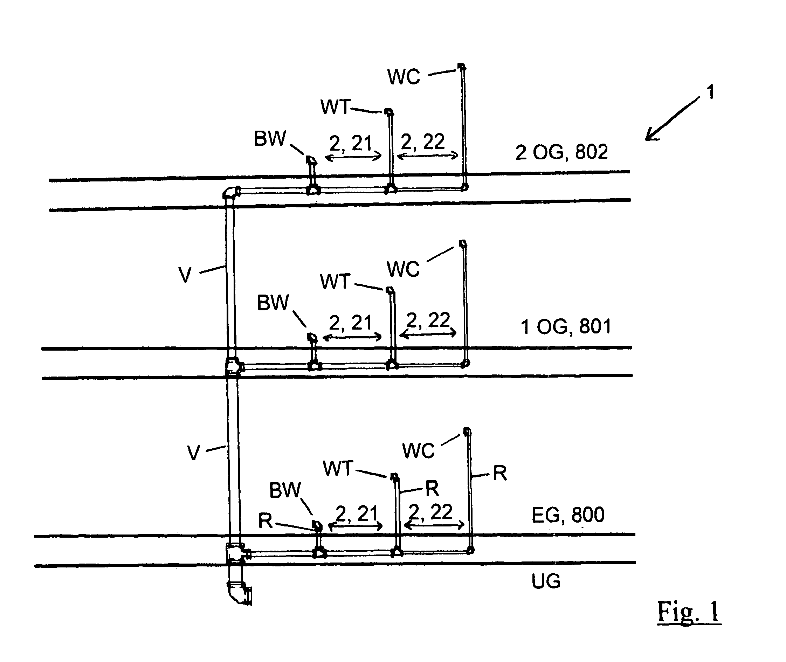

Die Kaltwasserinstallation 1 gemäss Fig. 1 erstreckt sich über vier Etagen eines Gebäudes, nämlich über das Untergeschoss UG, das Erdgeschoss EG, das erste Obergeschoss 10G und das zweite Obergeschoss 20G.

Die Kaltwasserinstallation 1 umfasst somit drei Subsysteme 800, 801, 802, wobei das Subsystem 800 im Erdgeschoss EG, das Subsystem 801 im ersten Obergeschoss 10G und das Subsystem 802 im zweiten Obergeschoss 20G vorgesehen ist.

Zur Vereinfachung der Diskussion wurde ein relative einfaches Rohrleitungssystem 1 gewählt, bei welchem alle Subsystem 800, 801, 802, im wesentlichen identisch sind und auf jeder Etage jeweils nur ein Badezimmer betreffen, wobei in jedem Badezimmer ein Abschluss für eine Badewanne BW, einen Waschtisch WT, und eine Toilette WC vorgesehen ist.

Es versteht, dass in der Realität eine ganze Reihe weiterer Anschlüsse in einem Subsystem 800, 801, 802 vorgesehen sein können, so wird in der Regel zusätzlich in der Regel eine komplette Kücheninstallation mit Spülbecken, Spülmaschine usw. vorgesehen sein. Auch können natürlich auf einer Etage mehrere Subsysteme vorgesehen sein, die zum Beispiel zu verschiedenen Wohnungen gehören oder es kann natürlich auch möglich sein, dass beispielsweise auf einer Etage nur eine Kücheninstallätion ist und auf einer anderen Etage nur eine Badinstallation. Die Subsysteme 800, 801, 802 die mit dem erfindungsgemässen Verfahren bearbeitet werden können, müssen somit natürlich nicht identisch sein, sondern können auch teilweise oder alle verschieden sein.

Die Subsysteme 800, 801, 802 sind in bekannter Weise Ober Vernetzungsleitungen V miteinander vernetzt, wobei im Fall der Kaltwasserinstallation 1 der Fig. 1 die Vernetzungsleitung V ein Steigrohr V ist, Ober das Kaltwasser den verschiedenen Subsystemen 800, 801, 802 zugeführt wird, so dass Kaltwasser an den jeweiligen Zapfstellen der Badewanne BW, dem Waschtisch WT, und der Toilette WC zur Verfügung steht.

Das zugehörige Abwassersystertt ist übrigens aus Gründen der Übersichtlichkeit in Fig. 1 nicht dargestellt und könnte im Bedarfsfall selbstverständlich ebenfalls mit dem erfindungsgemässen Bearbeitungsverfahren saniert werden.

Die Subsysteme 800, 801, 802 gemäss Fig. 1 umfassen jeweils ein erstes Teilsystem 2, 21, das im vorliegenden Beispiel durch die Rohrleitungen zwischen der Badewanne BW und dem Waschtisch WT definiert ist und ein zweites Teilsystem 2, 22, das im vorliegenden Beispiel durch die Rohrleitungen zwischen dem Waschtisch WT und der Toilette WC definiert ist. In Subsystemen, in denen noch weitere Anschlüsse vorgesehen sind, sind entsprechend zusätzliche Teilsysteme 2 definiert.

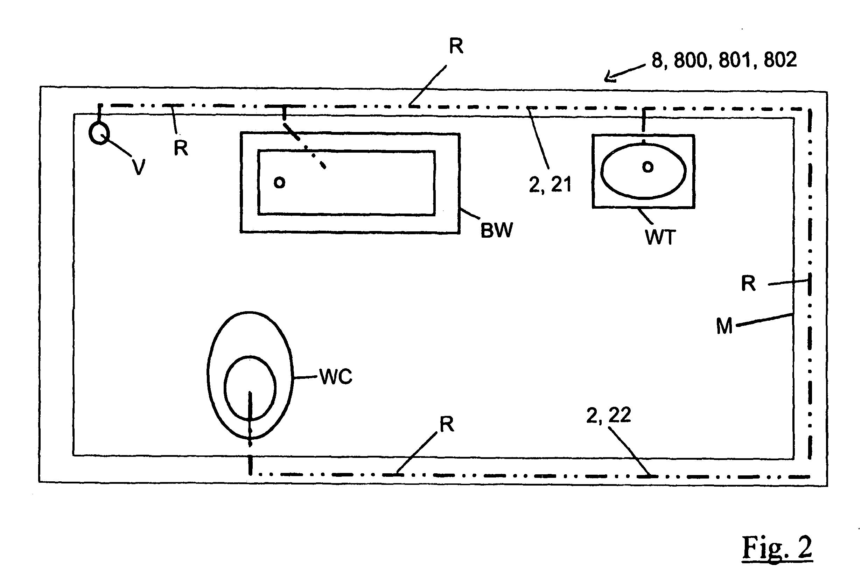

In Fig. 2 ist der tatsächliche Verlauf der Rohrleitungen R der Teilsysteme 2, 21, 22 der Kaltwasserinstallation gemäss Fig. 1 im Mauerwerk M des Gebäudes dargestellt. Der Einfachheit halber wird davon ausgegangen, dass dieser Verlauf der Rohrleitungen R in allen drei Etagen EG, 10G, 20G identisch ist, was natürlich in der Praxis nicht der Fall zu sein braucht und für die Anwendung der vorliegenden Erfindung im wesentlichen auch ohne Bedeutung ist.

Es ist klar zu erkennen, dass sowohl die Badewanne BW, als auch der Waschtisch WT auf dem kürzest möglichen Weg durch das Mauerwerk M über die Rohrleitung R mit dem Steigrohr V verbunden ist, während die Toilette WC nicht über die kürzeste Verbindung mit dem Steigrohr V verbunden ist, sondern über den bedeutend längeren Weg vorbei an der Badewanne BW und dem Waschtisch WT mit dem Steigrohr verbunden ist.

In der Praxis ist es leider häufig oft so, dass keine oder nur ungenaue Pläne Ober den tatsächlichen Verlauf der Rohre R im Mauerwerk M vorliegen. So kommt es häufig zu Missverständnisse, was zum Beispiel dazu führen kann, dass ein falscher verlauf der Rohre R im Mauerwerk M angenommen wird.

Eine solche Situation ist in Fig. 3 schematisch dargestellt, die wiederum teilweise den tatsächlichen Verlauf der Rohre R im Mauerwerk M für die Badewanne BW und den Waschtisch WT zeigt, wobei jedoch irrtümlich ein anderer Verlauf der Rohre R zwischen Toilette WC und Steigrohr V angenommen wird. Der fälschlich angenommene Verlauf F zwischen Toilette WC und Steigrohr V ist in Fig. 3 durch die punktierte Linie F dargestellt. Wir nun ein aus dem Stand der Technik bekanntes Verfahren angewendet um das Subsystem 8 des Rohrleitungssystem 1 gemäss Fig. 2 bzw. Fig. 3 zu sanieren, kommt es zwangsläufig zu fatalen Fehlern beim entleeren, Sandstrahlen, Trocknen und Entstauben und vor allem beim Beschichten des Rohrleitungssystems 1.

Alle bekannten Verfahren beruhen nämlich darauf, dass die Länge des zu bearbeitenden Rohrabschnitts, also die Länge des Rohres R des zu bearbeitenden Teilsystems 2, 21, 22 einigermassen genau bekannt sein muss. Die daraus resultierenden fatalen Konsequenzen, wenn die Länge der zu bearbeitenden Rohre R falsch abgeschätzt wird, ist am einfachsten am Verfahrensschritt des Beschichtens einzusehen, was anhand der Fig. 4 im folgenden kurz erläutert werden soll.

In Fig. 4 ist das Subsystem 8, 800, 801, 802 der Fig. 2 bzw. Fig. 3 nach dem Beschichten mittels eines aus dem Stand der Technik bekannten Verfahrens dargestellt. Dabei wurden vor dem Beschichten versehentlich zwei falsche Annahmen getroffen, da die Pläne, in denen das Subsystem aufgezeichnet war, fehlerhaft waren. Einerseits wurde angenommen, dass das die Toilette WC auf dem kürzesten Weg gemäss der punktierten Linie F mit dem Steigrohr V verbunden ist, Andererseits war im Plan die Distanz zwischen dem Waschtisch WT und der Badewanne BW zu klein angegeben. Das heisst, sowohl die Länge des Rohrs R von der Toilette WC zum nächsten Anschluss, nämlich zum Waschtisch WT, als auch die Länge des Rohrs R zwischen Waschtisch WT und Badewanne WT sind tatsächlich grösser als angenommen.

Der aus dem Stand der Technik bekannte Beschichtungsvorgang läuft wie folgt ab: zunächst wird die Länge des zu beschichtenden Rohrs zum Beispiel aufgrund eines Planes möglichst genau abgeschätzt und daraus unter Berücksichtigung der Innengeometrie des Rohrs die notwendige Menge an Beschichtungsmaterial 541 abgeschätzt. Die so errechnete Menge Beschichtungsmaterial 541 wird in einem Vorratsbehälter 5400 bereitgestellt, der zum Beispiel ein Schlauchstück 5400 sein kann. Im vorliegenden Beispiel der Fig. 4 werden so gleichzeitig die Anschlüsse der Toilette WC, des Waschtischs WT und der Badewanne BW mit dem Vorratsbehälter 5400 verbunden. Über die Ventile VT werden alle Vorratsbehälter 5400 gleichzeitig für eine vorgegebene Zeitdauer mit Druckluft D' beaufschlagt. Dadurch wird das Beschichtungsmaterial 541 aus den Vorratsbehältern 5400 in die Rohre R gedrückt und die Innenwände der Rohre R werden bis auf die zuvor berechnete Länge innen beschichtet. Die so beschichteten Rohrabschnitte R sind in Fig. 4 durch die mit durchgezogenen Linien gezeichneten Rohrabschnitte R gekennzeichnet. Die strichpunktiert dargestellten Rohrabschnitte R, die in den mit Fragezeichen ? eingekreisten Bereichen liegen, sind dagegen nicht beschichtet worden, weil aufgrund der fehlerhaften Pläne bzw. aufgrund fehlerhafter Annahmen die Länge der Rohrabschnitte R falsch berechnet wurden. Was noch schlimmer ist: dass Teile der Rohre R nicht beschichtet sind, kann bei den bekannten Verfahren überhaupt nicht festgestellt werden, da das Innere der Rohre ja zumindest über den grössten Teil ihrer Länge nicht zugänglich ist.

Im Ergebnis sind durch Verwendung eines aus dem Stand der Technik bekannten Verfahrens Teile der Rohre nicht beschichtet, was nicht bemerkt werden kann und was dazu führt, dass die Rohre in diesen Abschnitten z.B. weiter korrodieren, irgendwann durchgerostet sind, so dass die gesamte aufwendige Sanierung völlig nutzlos war.

Durch Verwendung des erfindungsgemässen Verfahrens sind solche fatalen Fehler völlig ausgeschlossen, wie im folgenden anhand der Beschreibung der erfindungsgemässen Verfahrensabläufe dargelegt werden wird.

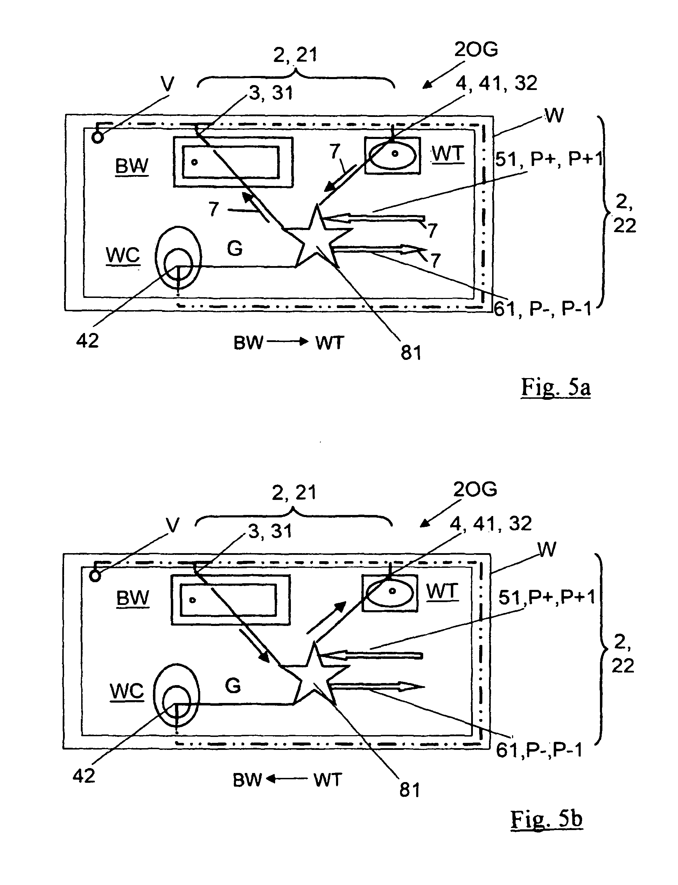

Anhand der Fig. 5a bis 5i soll zunächst ein spezielles Ausführungsbeispiel eines Entleerungsverfahren zur Entleerung eines Rohrleitungssystems 1 schematisch erläutert werden.

Gemäss Fig. 5a werden zunächst alle Subverteiler 81, die im vorliegenden Beispiel Nasszellenluftverteiler von einem oder mehreren hier nicht dargestellten Hauptverteiler 80, hier Treppenhausluftverteiler 80, mit einem unter dem Vorbereitungsüberdruck P₊, P₁₊ stehenden ersten Vorbereitungsmedium 51, das in diesem Beispiel einfach Druckluft 51 ist, beaufschlagt.

Der Nasszellenluftverteiler 81 der Fig. 5a bis 5i kann dabei an fünf verschiedene Anschlüssen 3, 4 gleichzeitig angeschlossen werden, wobei hier nur drei Anschlüsse verwendet werden. Selbstverständlich sind auch andere Nasszellenluftverteiler 51 die an mehr oder weniger als fünf Anschlüsse 3, 4 angeschlossen werden können vorteilhaft verwendbar.

Die Austrocknung beginnt bei einem mehrstöckigen Gebäude bevorzugt beim obersten Stockwerk und wird dann sukzessive abwärts bis zum untersten Stockwerk durchgeführt. Beim Beispiel der Fig. 5a bis Fig. 5i beginnt das Vorbereitungsverfahren zur Entleerung und Trocknung des Rohrteitungssystem 1 im 20G des Gebäudes, welches das oberste Stockwerk des Gebäudes ist.

In einem ersten Schritt werden gemäss Fig. 5a zunächst der erste Anschluss 31 der Badewanne BW mit dem unter dem Vorbereitungsüberdruck P₊₁ stehenden ersten Vorbereitungsmedium 51 beaufschlagt und der zweite Anschluss 41 wird mit dem unter dem Vorbereitungsunterdruck P₋₁ stehenden zweiten Vorbereitungsmedium 61 beaufschlagt, welches zweite Vorbereitungsmedium bevorzugt einfach Luft ist, das unter einem Unterdruck steht, der zum Beispiel von einer hier nicht dargestellten Absaugmaschine erzeugt wird.

Der Anschluss 42 der Toilette WC ist dagegen gesperrt, wie durch den Buchstaben G gekennzeichnet.

Dabei bedeutet allgemein im Rahmen dieser Anmeldung, dass ein Anschluss der mit einem G gekennzeichnet ist, gesperrt ist. Das heisst er ist zum Beispiel mittels eines Absperrhahns derart abgesperrt, dass er weder von einem ersten Arbeitsmedium 5, 51, 52, 53, 53, 54 noch von einem zweiten Arbeitsmedium 6, 61, 62, 63, 64 beaufschlagt ist.

Im ersten Schritt gemäss Fig. 5a wird also das erste Teilsystem 2, 21 zumindest teilweise von einem Prozessstoff befreit, zum Beispiel von dem Prozessstoff das Wasser, das im Betriebszustand des Rohrleitungssystems 1 durch das Rohrleitungssystem 1 zirkuliert. So entfernter Prozessstoff wird über den Nasszellenverteiler 81 und den Treppenhausverteiler 80 abgesaugt und zum Beispiel in einem Abscheider abgeschieden und geeignet entsorgt.

Die Pfeile in allen Figuren geben dabei die Richtung des Fluidstroms 7 im Rohrleitungssystem 1 an.

Sodann wird gemäss Fig. 5b die Richtung der Strömung des Vorbereitungsmediums 51, 61 im ersten Teilsystem 21 umgekehrt, in dem jetzt der zweite Anschluss 41 des ersten Teilsystems 21 mit dem unter dem Vorbereitungsüberdruck P₊₁ stehenden ersten Vorbereitungsmedium 51 beaufschlagt wird, während gleichzeitig der erste Anschluss 31 des ersten Teilsystems mit dem unter dem Vorbereitungsunterdruck P₋₁ stehenden zweiten Vorbereitungsmedium 61 beaufschlagt wird.

Dadurch dass die Teilsysteme 2, 21, 22 jeweils in zwei entgegen gesetzten Richtung vom Vorbereitungsmedium 51, 61 durchströmt werden, kann das Rohrleitungssystem besonders effektiv entleert bzw. getrocknet werden. Insbesondere Prozessstoffe, wie z.B. Wasser, das sich z.B. beim Entleeren des Rohrleitungssystems 1 an einer Biegungen des Rohrsystems 1 festsetzen und daher nicht entfernt werden können, wenn das Rohrleitungssystem 1 nur in einer Richtung entleert wird, können beim Durchspülen mit dem Vorbereitungsmedium 51, 61 in entgegen gesetzter Richtung in die entgegen gesetzte Richtung aus dem Rohrleitungssystem 1 ausgetragen werden.

Das ist einer der entscheidenden Vorteile des neuen Entleerungsverfahrens, bei welchem die Richtung des Fluidstroms 7 in einem gegebenen Teilsystem 2, 21, 22 mindestens einmal umgekehrt wird.

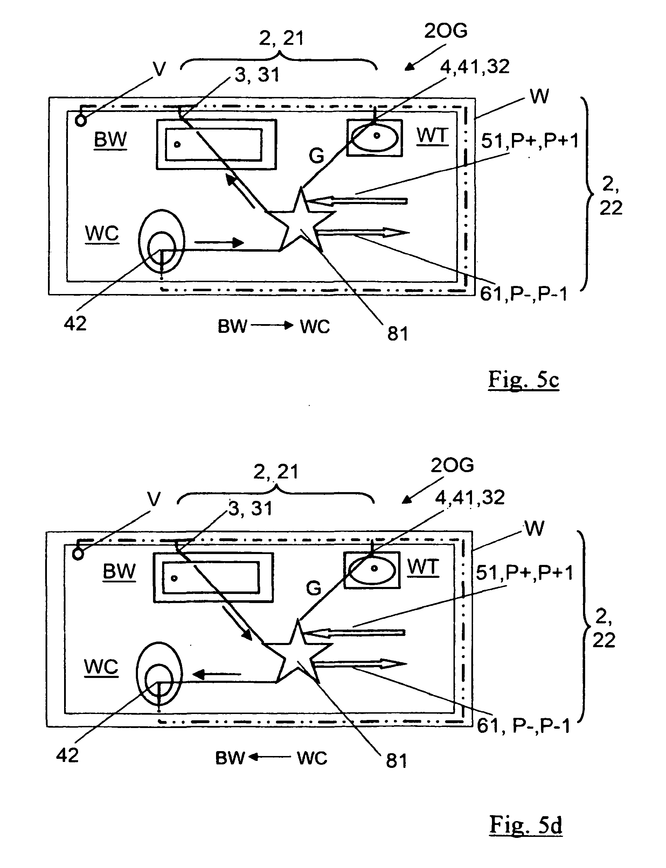

Die Fig. 5c und Fig. 5d zeigen den nächsten Verfahrensschritt, indem völlig analog nunmehr der Rohrleitungsabschnitt zwischen dem ersten Anschluss 31 der Badewanne BW und dem zweiten Anschluss 42 der Toilette WC entleert wird, während der Anschluss 41, 32 gesperrt ist, wie durch G gekennzeichnet.

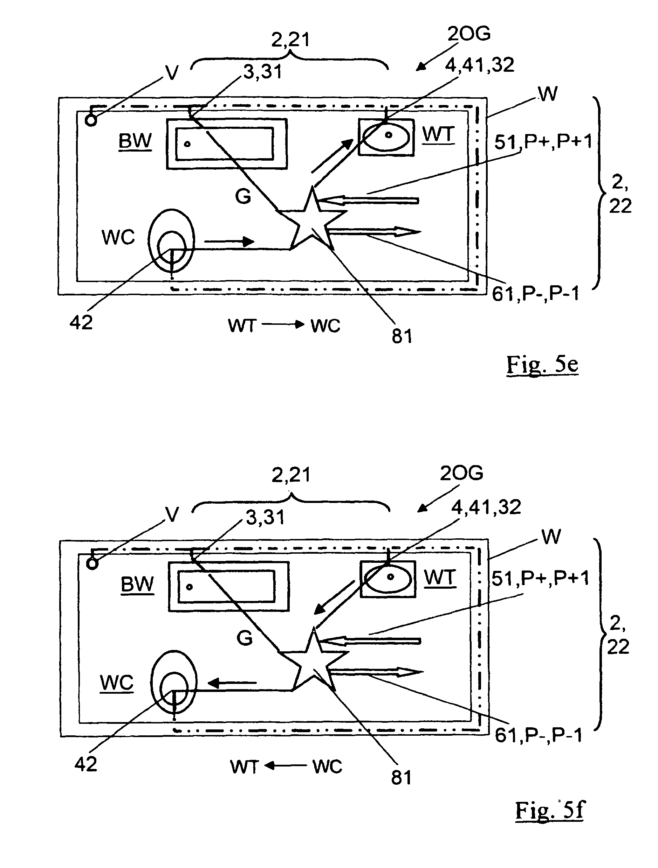

Als nächstes wird gemäss den Fig. 5e und 5f der Rohrleitungsabschnitt zwischen dem Anschluss 41 des Waschtischs WT und dem Anschluss 42 der Toilette 42 nacheinander in zwei entgegen gesetzte Richtungen entleert, indem gleichzeitig der Anschluss 31 der Badewanne BW gesperrt ist.

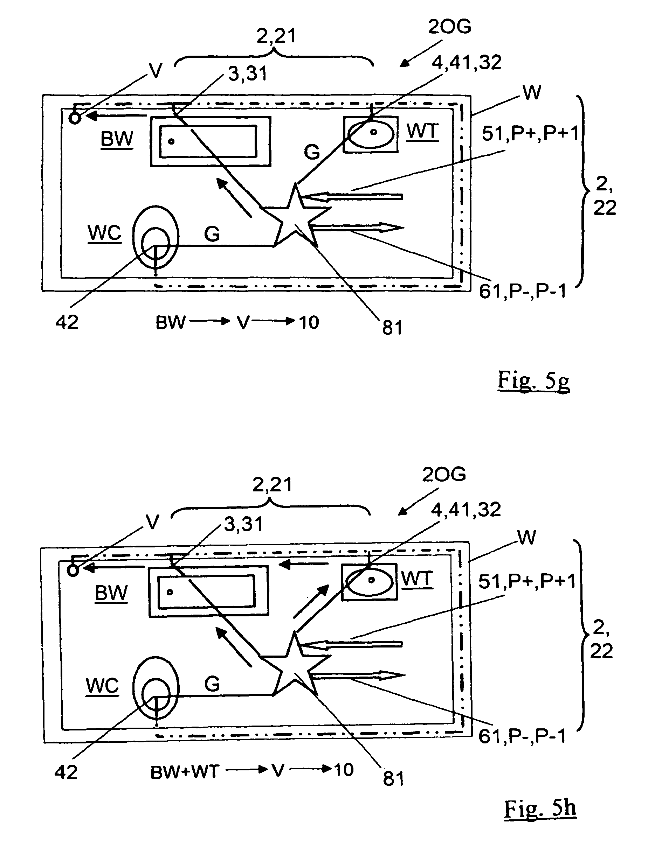

Bisher noch nicht entleert wurde der Rohrleitungsabschnitt zwischen dem Anschluss 31 der Badewanne BW und dem Steigrohr V. Daher werden gemäss Fig. 5g zunächst die Anschlüsse 41 am Waschtisch WT und der Anschluss 42 der Toilette WC gesperrt und nur der Anschluss 31 an der Badewanne BW mit dem unter dem Vorbereitungsüberdruck P₊₁, stehenden ersten Vorbereitungsmedium 51 beaufschlagt.

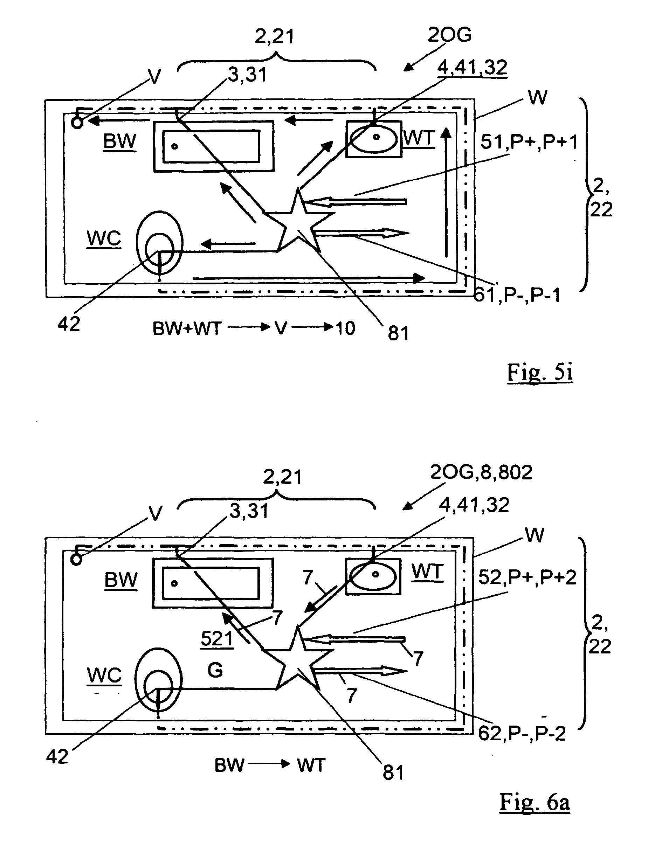

In einem vorletzten Schritt wird dann gemäss Fig. 5h auch der Anschluss des Waschtischs WT zusätzlich mit dem Vorbereitungsmedium 51 beaufschlagt, während der Anschluss 42 der Toilette WC noch gesperrt bleibt und zuletzt werden wie in Fig. 5i dargestellt alle Anschlüsse 3, 31, 32, 4, 41, 42 der Teilsysteme 2, 21, 22 des zweiten Obergeschosses 20G mit dem unter dem Vorbereitungsüberdruck P₊₁ stehenden ersten Vorbereitungsmedium 51 beaufschlagt, so dass eine sehr effektive und vollständige Entleerung des Rohrleitungssystems 1 im Bereich des zweiten Obergeschosses 20G inklusive des Steigrohres, zumindest bis zum ersten Obergeschoss 10G gewährleistet ist.

Völlig analog wird dann die Entleerung des Rohrleitungssystems 1 in den darunter gelegen Etagen fortgeführt, bis das Rohrleitungssystem 1 in allen Etagen entleert ist.

Am Ende wird das gesamte Rohrleitungssystem 1 noch für eine vorgegebe Zeitdauer, z.B. für fünf Minuten unter Druck gehalten, und anschliessend mittels Warmluft das gesamte entleerte Rohrleitungssystem 1 möglichst vollständig ausgetrocknet. Das Austrocknen mit Warmluft kann je nach Umständen zum Beispiel bei über 37°C und zum Beispiel ca. 45 min. dauern. Danach wird das gesamte Rohrleitungssystem 1 drucklos gestellt und das Rohrleitungssystem 1 ist bereit zum Reinigen, z.B. durch Sandstrahlen.

Das Sandstrahlen gemäss einem speziellen Ausführungsbeispiel eines neuen Sandstrahlprozesses wird nunmehr anhand der Fig. 6a bis Fig. 6j schematisch erläutert. Das Strahlen des Inneren des Rohrleitungssystems 1 dient der Reinigung und der Befreiung der Rohrinnenwände von Korrosion, wie zum Beispiel Rost, dem Entfernen von Ablagerungen wie zum Beispiel Kalk oder dem Entfernen oder Reinigen von anderen Verschmutzungen und Ablagerungen im Inneren des Rohrleitungssystems 1.

Im ersten Schritt gemäss Fig. 6a wird das erste Teilsystem 2, 21 zumindest teilweise von Verschmutzungen oder Ablagerungen befreit, zum Beispiel von Rost oder Kalkablagerungen befreit. So entfernte Verschmutzungen werden über den Nasszellenverteiler 81 und den Treppenhausverteiler 80 abgesaugt und zum Beispiel in einem Abscheider oder Zyklonabscheider abgeschieden und geeignet entsorgt.

Die Pfeile in allen Figuren geben dabei wiederum die Richtung des Fluidstroms 7 im Rohrleitungssystem 1 an.

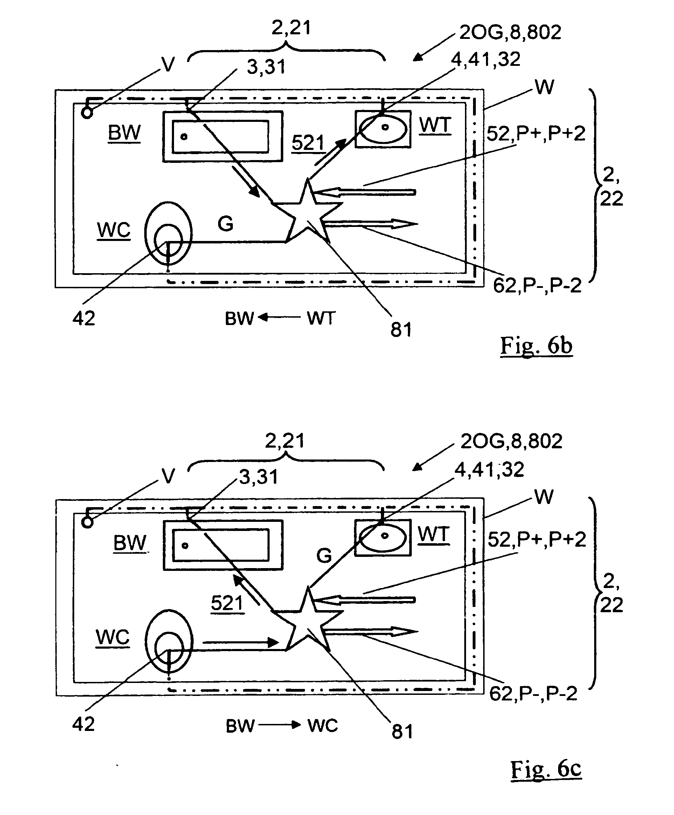

Sodann wird gemäss Fig. 6b die Richtung der Strömung des Strahlmedium 52, das bevorzugt Druckluft ist und mit einem Strahlmittel 521, bevorzugt mit Sand 521 beaufschlagt ist, im ersten Teilsystem 21 umgekehrt, in dem jetzt der zweite Anschluss 41 des ersten Teilsystems 21 mit dem unter dem Strahlüberdruck P₊₂ stehenden Strahlmedium 52 beaufschlagt wird, während gleichzeitig der erste Anschluss 31 des ersten Teilsystems mit dem unter dem Strahlunterdruck P₋₂ stehenden zweiten Strahlmedium 62, das bevorzugt Luft unter Unterdruck ist, beaufschlagt wird.

Dadurch dass gemäss dem neuen Strahlverfahren die Teilsysteme 2, 21, 22 jeweils in zwei entgegen gesetzten Richtung vom Strahlmittel 521 gestrahlt werden, kann das Rohrleitungssystem besonders effektiv gesäubert werden. Insbesondere Verschmutzungen oder Ablagerungen die sich z.B. beim Strahlen des Rohrleitungssystems 1 an einer Biegungen des Rohrsystems 1 festsetzen und daher nicht entfernt werden können, wenn das Rohrleitungssystem 1 nur in einer Richtung gestrahlt wird, können beim Strahlen mit dem Strahlmittel 521 in entgegen gesetzter Richtung in die entgegen gesetzte Richtung aus dem Rohrleitungssystem 1 ausgetragen werden.

Ausserdem behandelt das neue Strahlverfahren die Rohre des Rohrleitungssystems 1 viel schonender als die aus dem Stand der Technik bekannten Prozesse. Da die Rohrabschnitte nacheinander in zwei verschiedene Richtungen gestrahlt werden, wirkt die abrasive Strahlbehandlung, die natürlich auch das Mantelmaterial der Rohe in gewissem Masse zwangsläufig immer angreift, weniger aggressiv, weil die abrasive Belastung auf die Rohrwände in beide Richtungen wirkt und nicht einseitig nur in einer Richtung. Darüber hinaus kann durch das zweiseitige Strahlen die Intensität des Strahlens, also zum Beispiel der Druck unter dem das Strahlmittel 521 durch die Rohre gepresst wird, für jede einzelne Strahlrichtung empfindlich niedriger gewählt werden. Das ist besonders wichtig an Biegungen des Rohrleitungssystems 1, die bei Verwendung der sehr aggressiven Sandstrahlverfahren, wie sie aus dem Stand der Technik bekannt sind. Bei Verwendung der bekannten Verfahren kommt es besonders an Biegungen, an denen das Strahlmedium mehr oder weniger senkrecht auf die Innenwand der Rohre trifft, oft zu massiven Schädigungen der Rohre, bis hin zu Durchschüssen, das heisst zu Löchern in der Rohrwand, was natürlich dann in aller Regel nur noch durch den Austausch der betroffen Rohrteile zu beheben ist, was ja gerade daurch das Sanierungsverfahren verhindert werden soll.

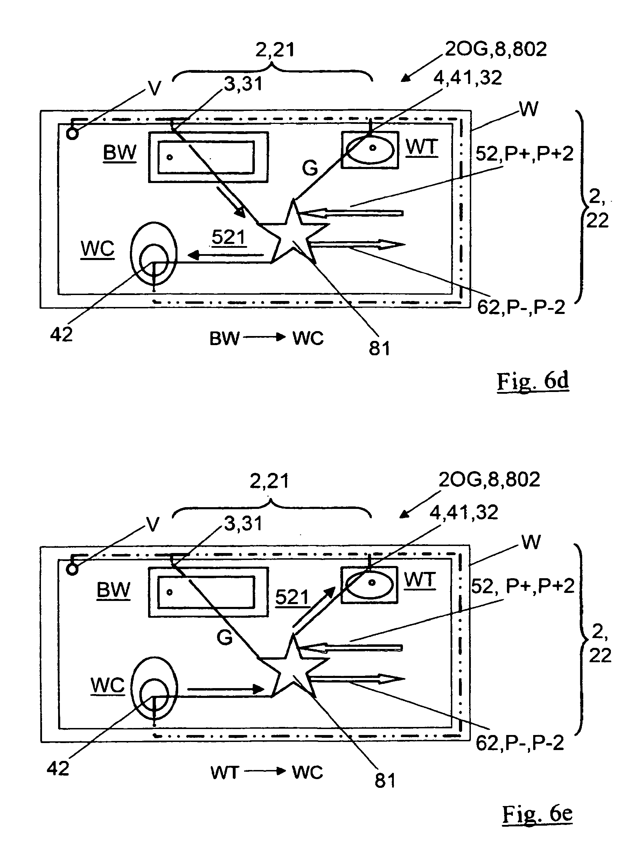

Die Fig. 6c und Fig. 6d zeigen den nächsten Verfahrensschritt, indem völlig analog nunmehr der Rohrleitungsabschnitt zwischen dem ersten Anschluss 31 der Badewanne BW und dem zweiten Anschluss 42 der Toilette WC sandgestrahlt wird, während der Anschluss 41, 32 gesperrt ist, wie durch G gekennzeichnet.

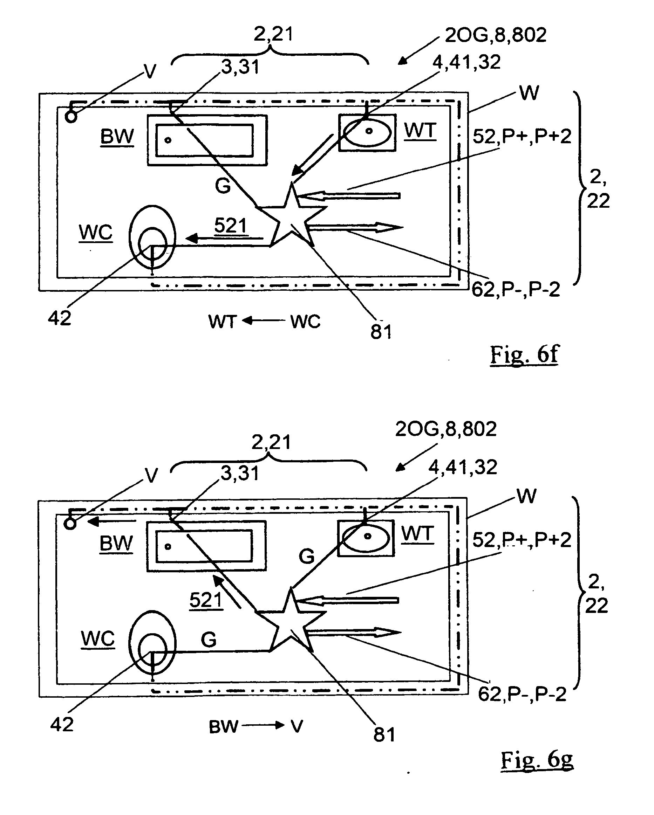

Als nächstes wird gemäss den Fig. 6e und 6f der Rohrleitungsabschnitt zwischen dem Anschluss 41 des Waschtischs WT und dem Anschluss 42 der Toilette 42 nacheinander in zwei entgegen gesetzte Richtungen entleert, indem gleichzeitig der Anschluss 31 der Badewanne BW gesperrt ist.

Bisher noch nicht gestrahlt wurde der Rohrleitungsabschnitt zwischen dem Anschluss 31 der Badewanne BW und dem Steigrohr V. Daher werden gemäss Fig. 6g zunächst die Anschlüsse 41 am Waschtisch WT und der Anschluss 42 der Toilette WC gesperrt und nur der Anschluss 31 an der Badewanne BW mit dem unter dem Strahlüberdruck P₊₂ stehenden ersten Strahlmedium 52 beaufschlagt.

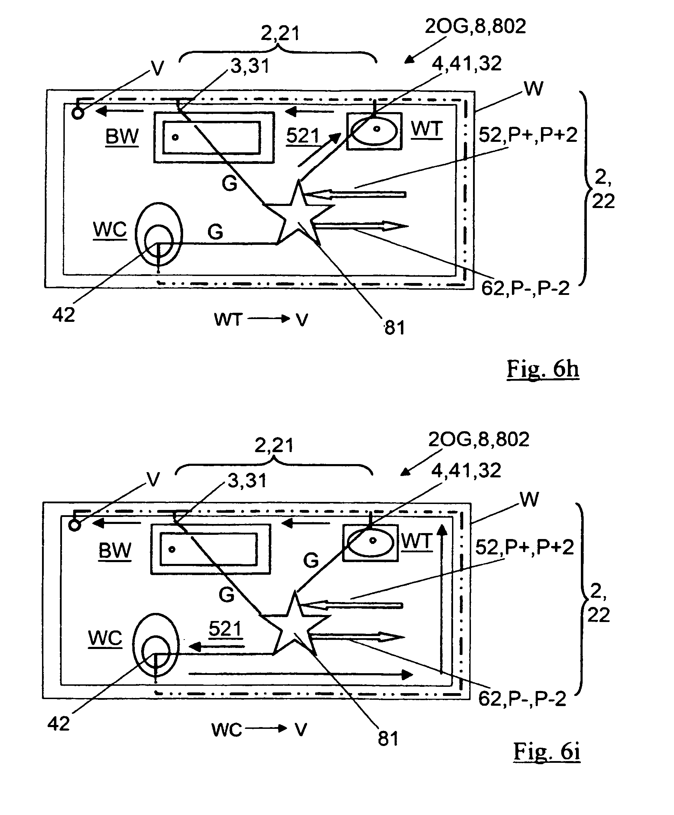

In einem nächsten Schritt gemäss Fig. 6h werden dann die Anschlüsse 42 und 31 gesperrt und es wird nur über die Strecke Waschtisch WT nach Steigrohr V gestrahlt und zuletzt wird gemäss Fig. 6i nur über die Strecke Toilette WC nach Steigrohr V gestrahlt, während die Anschlüsse 41 und 31 gesperrt sind.

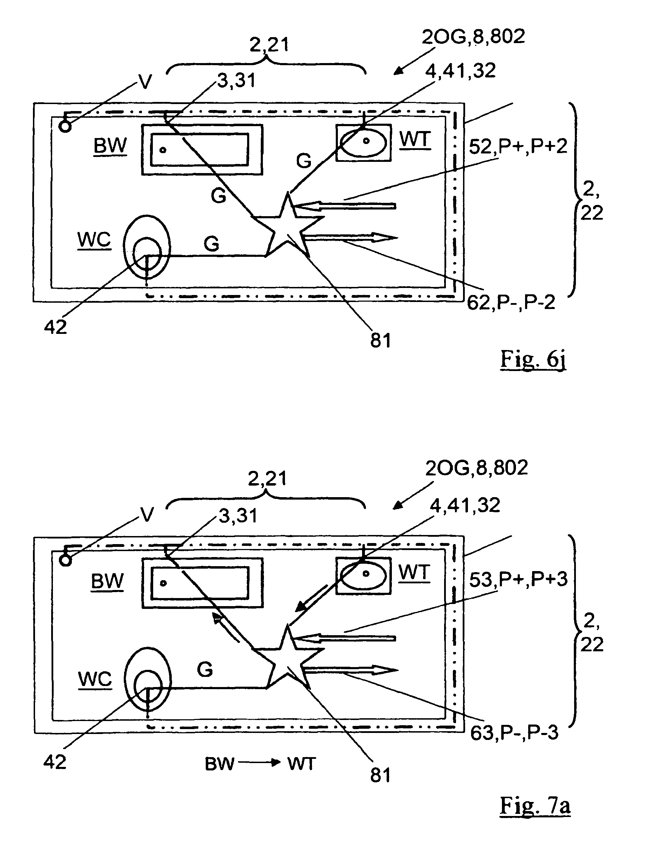

Damit ist der Sandstrahlprozess im zweiten Obergeschoss 20G abgeschlossen, wie in Fig. 6j gezeigt werden alle Anschlüsse 3,31,32,4,41,42 der Teilsysteme 2, 21, 22 gesperrt und der Sandstrahlprozess wird völlig analog im ersten Obergeschoss 10G fortgeführt, bis schliesslich das gesamte Rohrleitungssystem 1 von Verschmutzungen und Ablagerungen gereinigt ist.

Bevor mit dem Beschichten des Rohrleitungssystems 1 begonnen werden kann, muss das Rohrleitungssystem 1 noch entstaubt werden, also von festen Rückständen wie staubförmigen Ablagerungen, Rückständen von Strahlmitteln usw. befreit werden, die entweder noch lose in den Rohren liegen oder noch an der Rohrinnenwand, vor allem noch an Biegungen des Rohrleitungssystem 1 haften oder abgelagert sind.

Hierzu wird gemäss den Fig. 7a bis Fig. 7i ein neuer Entstaubungsprozess durchgeführt, der sehr dem oben beschriebenen Entleerungsprozess ähnelt.

In einem ersten Schritt werden gemäss Fig. 7a zunächst der erste Anschluss 31 der Badewanne BW mit dem unter dem Entstaubungsüberdruck P₊₃ stehenden ersten Entstaubungsmedium 53, bevorzugt mit Luft 53 beaufschlagt und der zweite Anschluss 41 wird mit dem unter dem Entstaubungsunterdruck P₋₃ stehenden zweiten Entstaubungsmedium 63 beaufschlagt, welches zweite Entstaubungsmedium 63 bevorzugt einfach Luft 63 ist, die unter einem Unterdruck steht, der zum Beispiel von einer hier nicht dargestellten Absaugmaschine erzeugt wird.

Der Anschluss 42 der Toilette WC ist dagegen gesperrt, wie durch den Buchstaben G gekennzeichnet.

Im ersten Schritt gemäss Fig. 7a wird also das erste Teilsystem 2, 21 zumindest teilweise von einem Staub befreit, der beim Strahlen im Rohdeitungssystem 1 zurückgeblieben ist. So entfernter Staub wird über den Nasszellenverteiler 81 und den Treppenhausverteiler 80 abgesaugt und zum Beispiel in einem Abscheider oder Zyklonabscheider abgeschieden und geeignet entsorgt.

Die Pfeile in allen Figuren geben wie zuvor dabei die Richtung des Fluidstroms 7 im Rohrleitungssystem 1 an.

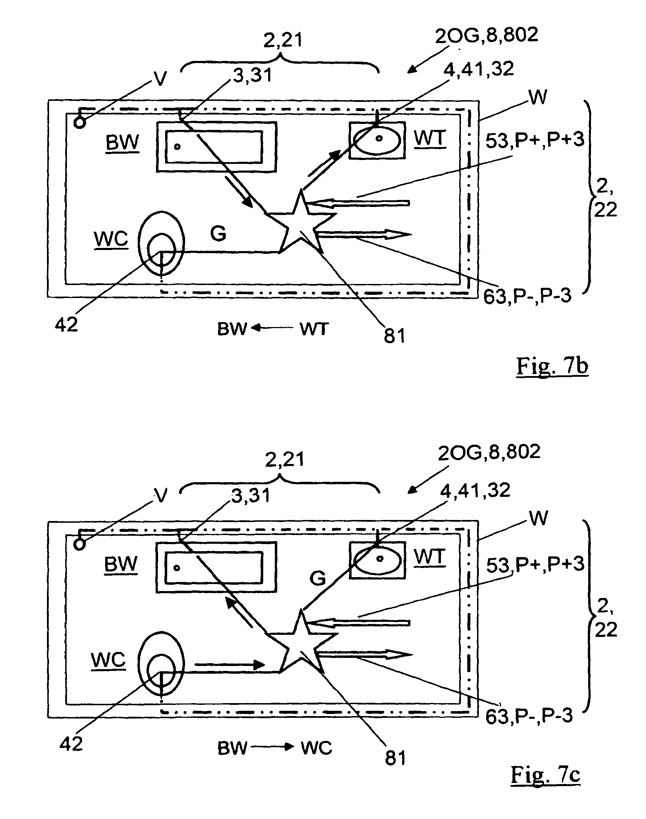

Sodann wird gemäss Fig. 7b die Richtung der Strömung des Entstaubungsmediums 53, 63 im ersten Teilsystem 21 umgekehrt, in dem jetzt der zweite Anschluss 41 des ersten Teilsystems 21 mit dem unter dem Entstaubungsüberdruck P₊₃ stehenden ersten Entstaubungsmedium 53 beaufschlagt wird, während gleichzeitig der erste Anschluss 31 des ersten Teilsystems mit dem unter dem Entstaubungsunterdruck P₋₃ stehenden zweiten Vorbereitungsmedium 63 beaufschlagt wird.

Dadurch dass gemäss dem neuen Entstaubungsverfahren die Teilsysteme 2, 21, 22 jeweils in zwei entgegen gesetzten Richtung vom Entstaubungsmedium 53, 63 durchströmt werden, kann das Rohrleitungssystem besonders effektiv entstaubt werden. Insbesondere Rückstände, die sich beim Strahlen des Rohrleitungssystems 1 an einer Biegung des Rohrsystems 1 festsetzen und daher nicht entfernt werden können, wenn das Rohrleitungssystem 1 nur in einer Richtung entstaubt wird, können beim Durchspülen mit dem Entstaubungsmedium 53, 63 in entgegen gesetzter Richtung in die entgegen gesetzte Richtung aus dem Rohrleitungssystem 1 ausgetragen werden.

Das ist einer der entscheidenden Vorteile des neuen Entstaubungsverfahrens, bei welchem die Richtung des Fluidstroms 7 in einem gegebenen Teilsystem 2, 21, 22 mindestens einmal umgekehrt wird.

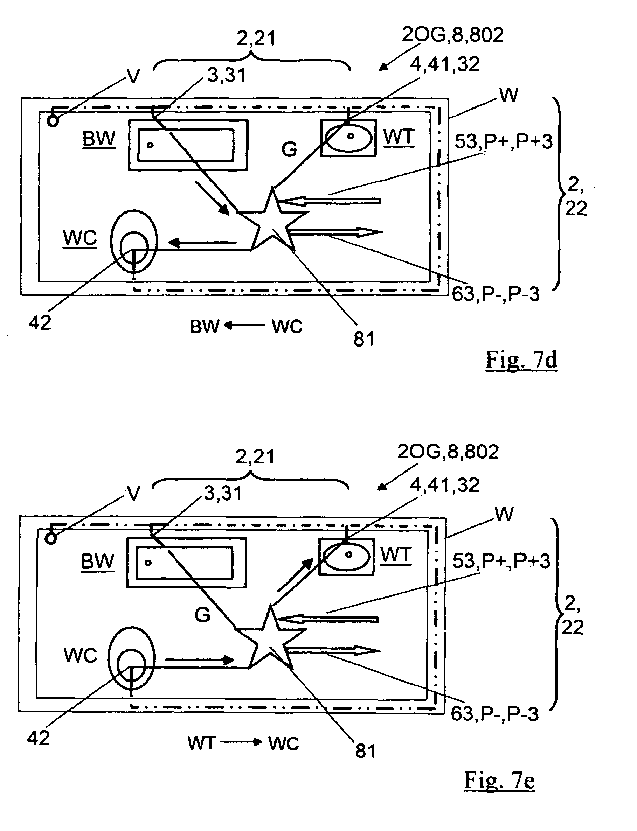

Die Fig. 7c und Fig. 7d zeigen den nächsten Verfahrensschritt, indem völlig analog nunmehr der Rohrleitungsabschnitt zwischen dem ersten Anschluss 31 der Badewanne BW und dem zweiten Anschluss 42 der Toilette WC entleert wird, während der Anschluss 41, 32 gesperrt ist, wie durch G gekennzeichnet.

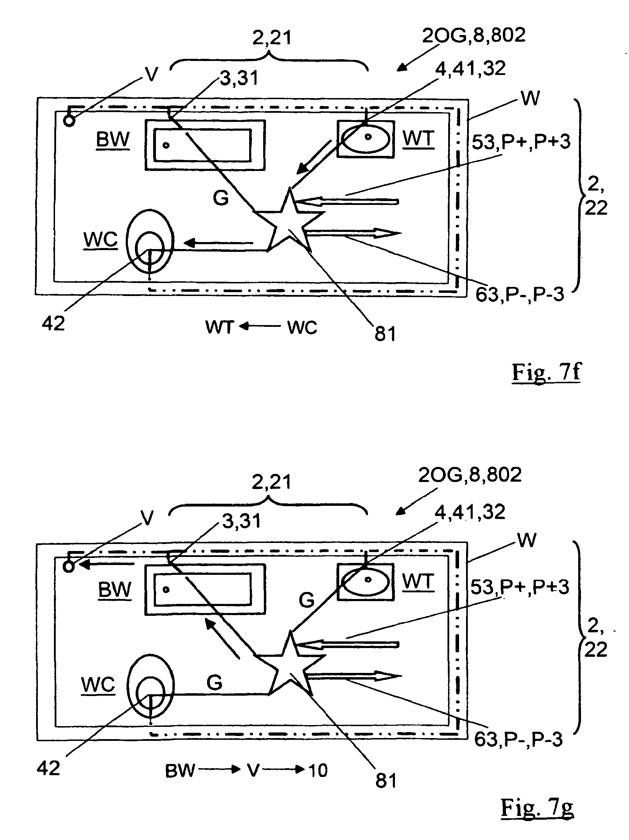

Als nächstes wird gemäss den Fig. 7e und 7f der Rohrteitungsabschnitt zwischen dem Anschluss 41 des Waschtischs WT und dem Anschluss 42 der Toilette 42 nacheinander in zwei entgegen gesetzte Richtungen entleert, indem gleichzeitig der Anschluss 31 der Badewanne BW gesperrt ist.

Bisher noch nicht entleert wurde der Rohrleitungsabschnitt zwischen dem Anschluss 31 der Badewanne BW und dem Steigrohr V. Daher werden gemäss Fig. 7g zunächst die Anschlüsse 41 am Waschtisch WT und der Anschluss 42 der Toilette WC gesperrt und nur der Anschluss 31 an der Badewanne BW mit dem unter dem Entstaubungsüberdruck P₊₃ stehenden ersten Entstaubungsmedium 53 beaufschlagt.

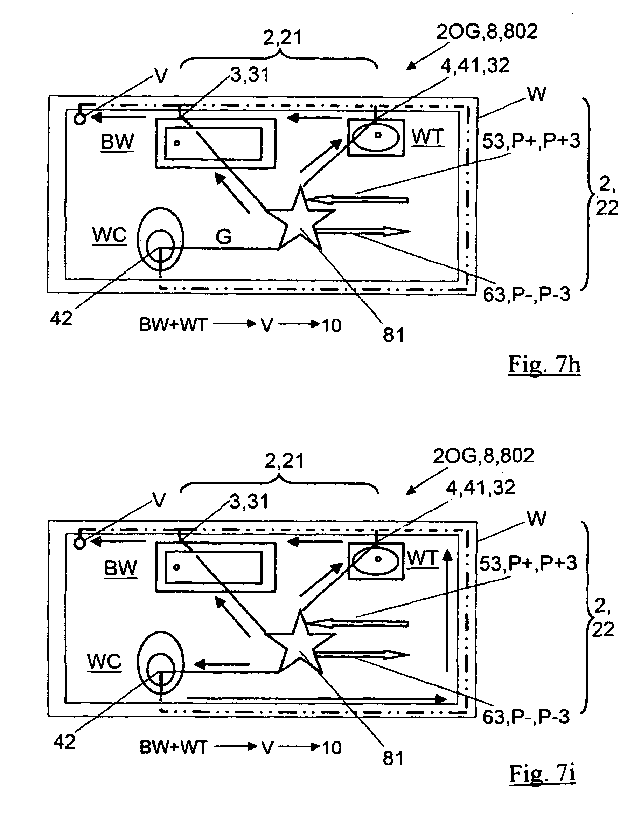

In einem vorletzten Schritt wird dann gemäss Fig. 7h auch der Anschluss des Waschtischs WT zusätzlich mit dem Entstaubungsmedium 53 beaufschlagt, während der Anschluss 42 der Toilette WC noch gesperrt bleibt und zuletzt werden wie in Fig. 7i dargestellt alle Anschlüsse 3, 31, 32, 4, 41, 42 der Teilsysteme 2, 21, 22 des zweiten Obergeschosses 20G mit dem unter dem Entstaubungsüberdruck P₊₃ stehenden ersten Entstaubungsmedium 53 beaufschlagt, so dass eine sehr effektive und vollständige Entstaubung des Rohrleitungssystems 1 im Bereich des zweiten Obergeschosses 20G inklusive des Steigrohres, zumindest bis zum ersten Obergeschoss 10G gewährleistet ist.

Völlig analog wird dann die Entstaubung des Rohrleitungssystems 1 in den darunter gelegen Etagen fortgeführt, bis das Rohrleitungssystem 1 in allen Etagen entstaubt ist.

Am Ende kann das gesamte Rohrleitungssystem 1 noch für eine vorgegebe Zeitdauer, z.B. für fünf Minuten unter Druck gehalten, und anschliessend mittels Warmluft für das nachfolgende Beschichten erwärmt werden. Das Erwärmen mit Warmluft kann je nach Umständen zum Beispiel bei über 37°C und zum Beispiel ca. 45 min. dauern. Danach wird das gesamte Rohrleitungssystem 1 drucklos gestellt und das Rohrleitungssystem 1 ist bereit zum Beschichten.

Wie bereits oben erwähnt, besteht ein Problem beim Beschichten von Rohrleitungssystemen 1 von Gebäuden häufig darin, dass keine Pläne für das Sanitär-Leitungssystem 1 existieren. Und selbst wenn solche Pläne existieren, sind die Rohre R oft anders als auf den Plänen angegeben verlegt. Bei den bisher bekannten Beschichtungsverfahren kann dies, wie weiter oben ausführlich erläutert zur Folge haben, dass Rohrabschnitte nicht beschichtet werden, oder aus Unkenntnis des Leitungsverlaufes zu viel Epoxydharz in die Rohre R eingegeben wird, was zur Reduzierung oder sogar zur Verstopfung der Rohrleitungen R führen.

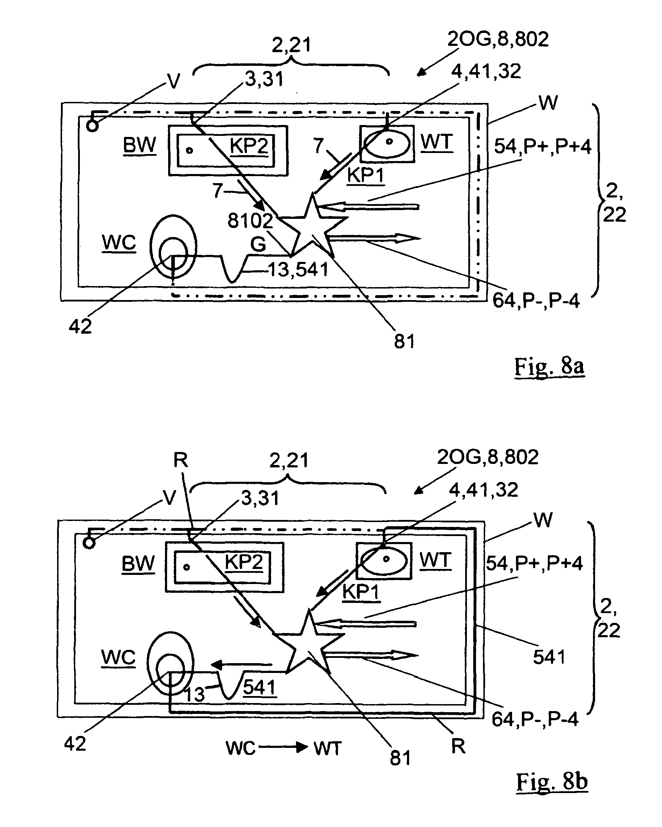

Bei korrekter Verwendung des erfindungsgemässen Beschichtungsverfahrens sind solche Fehler grundsätzlich nicht möglich, da das erfindungsgemässe Verfahren quasi automatisch und kontrolliert zu einer exakten Beschichtung des gesamten Rohleitungssystems 1 führt. Um dies zu demonstrieren, wird im folgenden anhand der Fig. 8a bis Fig. 8n ein bevorzugtes Ausführungsbeispiel eingehend beschrieben, das für die Praxis von besonderer Bedeutung ist.

Die Beschichtung des Rohrsystems 1 beginnt bevorzugt, aber nicht zwingend in der obersten Etage des Gebäudes, im vorliegenden Beispiel im zweiten Obergeschoss 20G.

Vor dem eigentlichen Start des erfindungsgemässen Beschichtungsverfahrens wird zunächst ein Vorratsbehälter 13, bevorzugt ein Vorratsschlauch 13 mit Beschichtungsmaterial 541, im vorliegenden Beispiel mit Epoxidharz 541 zwischen dem Anschluss 42 an der Toilette WC und einem Überdruckauslass 8102 am Nasszellenverteiler 81 vorgesehen. Zunächst ist die Verbindung zum Anschluss 42 noch gesperrt, so dass der Vorratsschlauch 13 noch nicht mit dem unter dem Beschichtungsüberdruck P₊₄ stehenden ersten Druckfluid 54 beaufschlagt ist. Die beiden anderen Anschlüsse 3, 31, 4, 41, 32 werden über den Nasszellenverteiler 81 mit dem unter dem Beschichtungsunterdruck P₋₄ stehenden zweiten Druckfluid 64 beaufschlagt, wie die Pfeile 7 andeuten.

Nach diesen vorbereitenden Massnahmen kann das eigentliche Beschichtungsverfahren gestartet werden.

Gemäss Fig. 8b wird nun der Vorratsbehälter 13, enthaltend das Beschichtungsmaterial 541 dem ersten Druckfluid 54 mit dem Beschichtungsüberdruck P₊₄ ausgesetzt, so dass das Beschichtungsmaterial über den Anschluss 42 in das zweite Teilsystem 2, 22 gepresst bzw. eingeblasen wird und die Innenwand des Rohrs R in an sich bekannter Weise mit dem Beschichtungsmaterial 541 beschichtet wird. Gleichzeitig ist am Anschluss 3, 31 an der Badewanne BW und am Anschluss 4, 41, 32 am Waschtisch WT der Beschichtungsunterdruck P₋₄ wirksam, so dass einerseits das Einblasen des Beschichtungsmaterials 541 über den Anschluss 42 an der Toilette WC durch Saugen unterstützt wird und andererseits die noch nicht zu beschichtenden Rohrabschnitte R von unerwünschten Stoffen, z.B. von Gasen oder Tropfen des Beschichtungsmaterials, eventuell noch vorhandenem Schmutz und anderem unerwünschtem Stoffen befreit werden, die dann über den Nasszellenverteiler 81 und den Treppenhausverteiler 80 abgesaugt und zum Beispiel in einem Abscheider 12 oder einem Zyklonabscheider 121 abgeschieden und geeignet entsorgt werden.

Die Pfeile in allen Figuren geben dabei wie üblich die Richtung des Fluidstroms 7 im Rohrleitungssystem 1 an.

Am Anschluss 4, 41, 32 am Waschtisch WT ist ein erster Kontrollpunkt KP1 vorgesehen, an welchem mittels eines Detektionsmittels kontrolliert bzw. detektiert wird, wenn das Beschichtungsmaterial 541 am Anschluss 4, 41, 32 austritt bzw. den ersten Kontrollpunkt KP1 erreicht. Das Detektionsmittel kann z.B. ein beliebiger elektronischer Sensor sein, der geeignet ist das Beschichtungsmaterial sicher zu detektieren. Z.B. ein optischer Sensor, ein Ultraschallsensor, ein kapazitiver oder induktiver Sensor, ein Leitfähigkeitssensor oder ein beliebiger anderer Sensor sein. Wenn keine vollständige Automatisierung des erfindungsgemässen Verfahrens notwendig ist, kann das Detektionsmittel auch einfach ein Stück transparenter Schlauch sein, so dass eine am ersten Kontrollpunkt KP1 platzierte Person das Austreten des Beschichtungsmaterials am Anschluss 4, 41, 32 kontrollieren und die weiteren Verfahrensschritte einleiten kann.

An dieser Stelle sein nochmals ausdrücklich erwähnt, dass das erfindungsgemässe Verfahren auch vollständig automatisiert werden kann. Und zwar nicht nur das Beschichten selbst, sondern beginnend mit dem Entleeren, Trocknen, Sandstrahlen, Entstauben und schliesslich dem abschliessenden Beschichten, ist der gesamte Verfahrensablauf von Anfang bis Ende automatisierbar, wenn nur an den entsprechenden Stellen der erfindungsgemässen Arbeitsvorrichtung die an sich frei erhältlichen, bzw. mit dem Wissen des Fachmanns relativ einfach herstellbaren notwendigen Detektoren, automatischen Ventile und Umschaltvorrichtungen und weitere automatisch bedienbare Komponenten verwendet werden. Der Fachmann versteht sofort, um welche notwendigen automatisch bedienbaren Systemkomponenten es sich handelt und an welchen Stellen im System sie vorgesehen werden müssen. Werden diese Systemkomponenten geeignet mit einer Steuerung und / oder Regelung, bevorzugt umfassend eine elektronische Datenverarbeitungsanlage verbunden, lassen sich alle im Rahmen dieser Anmeldung beschriebenen Verfahren entweder einzeln oder in jedweder Kombination vollautomatisch durchführen, wodurch in enormem Umfang Personal und damit Kosten eingespart werden. Ausserdem werden dadurch Fehler durch das Bedienungspersonal nahezu vollständig ausgeschlossen.

Nachdem am ersten Kontrollpunkt KP1 das Austreten des Beschichtungsmaterial 541 festgestellt wird, ist sichergestellt, dass das zweite Teilsystem 2, 22, das heisst der Rohrabschnitt R zwischen dem Anschluss 42 der Toilette WC und dem Anschluss 4, 41, 32 vollständig beschichtet ist.

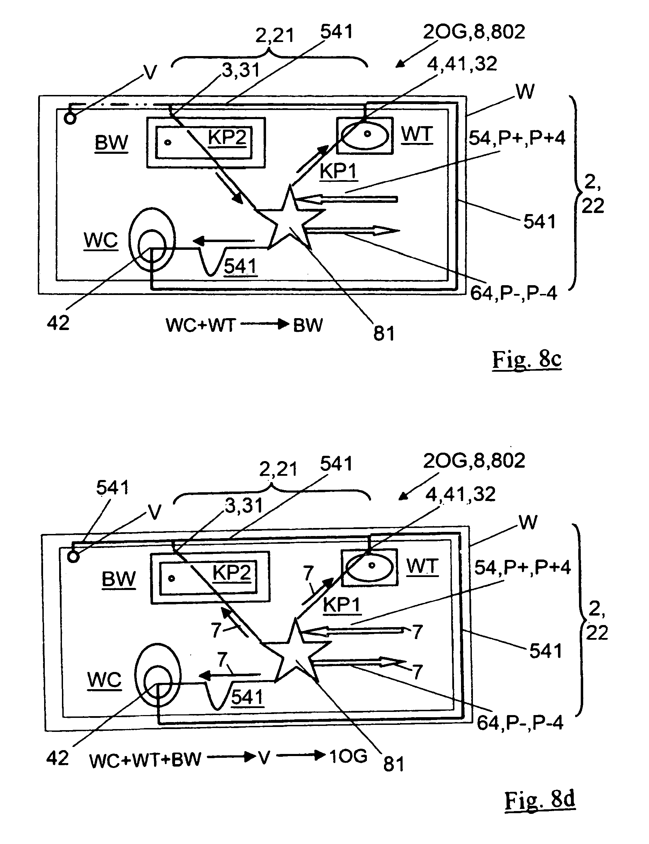

Zur weiteren Beschichtung des Teilsystems 2, 21 zwischen dem Anschluss 4, 41, 32 des Waschtischs WT und dem Anschluss 3, 31 der Badewanne BW, wo ein zweiter Kontrollpunkt KP2 vorgesehen ist, wird gemäss Fig. 8c der Anschluss 4, 41, 32 am Waschtisch WT jetzt zusätzlich zum Anschluss 42 an der Toilette WC mit dem unter dem Beschichtungsüberdruck P₊₄ stehenden ersten Druckfluid 54 beaufschlagt, und der Beschichtungsvorgang solange fortgeführt, bis am zweiten Kontrollpunkt KP2 an der Badewanne BW der Austritt des Beschichtungsmaterials am Anschluss 3, 31 beobachtet bzw. detektiert wird.

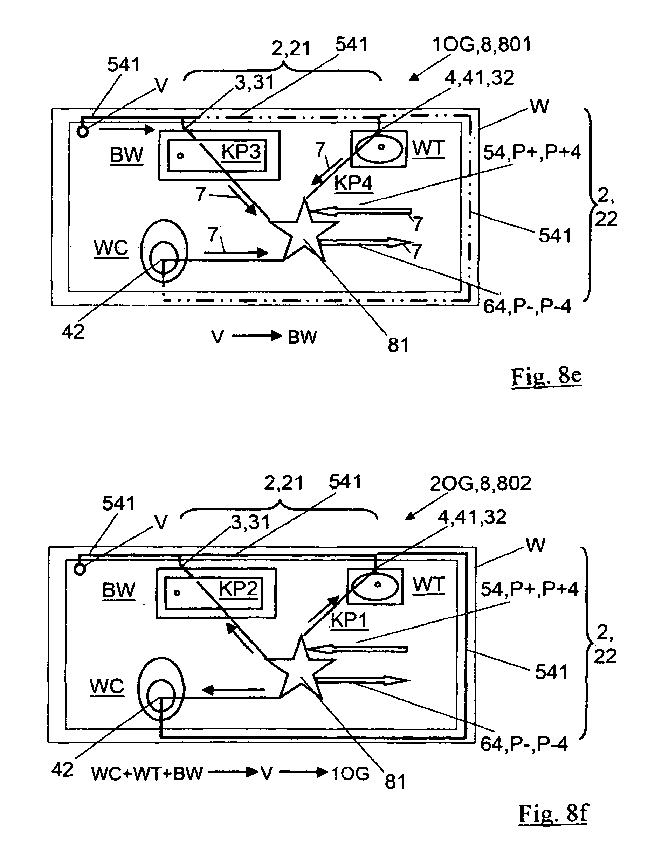

Sodann wird, wie in den Fig. 8d und Fig. 8e gezeigt, zur weiteren Beschichtung des Rohrabschnitts R vom Anschluss 3, 31 über das Steigrohr V bis zum dritten Kontrollpunkt KP3 im ersten Obergeschoss 10G zusätzlich auch der Anschluss 3, 31 im zweiten Obergeschoss 20G mit dem unter dem Beschichtungsüberdruck P₊₄ stehenden ersten Druckfluid 54 beaufschlagt, und im darunter liegenden ersten Obergeschoss 10G werden gleichzeitig alle Anschlüsse 3, 31, 4, 41, 32, 42 der Teilsysteme 2, 21, 22 des ersten Obergeschosses 10G mit dem unter dem Beschichtungsunterdruck P₋₄ stehenden zweiten Druckfluid 64 beaufschlagt, wie die Pfeile 7 andeuten, so dass das Beschichtungsmaterial 541 aus dem zweiten Obergeschoss 20G über das Steigrohr V bis zum Kontrollpunkt KP3, der sich im ersten Obergeschoss 10G am Anschluss 3, 31 der Badewanne BW befindet, gesaugt wird

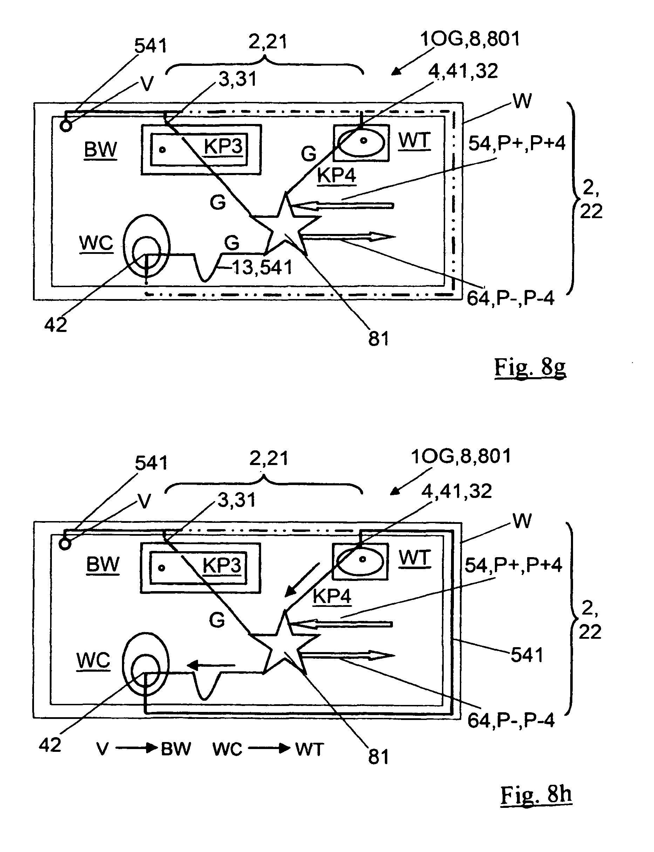

Sobald am Anschluss 3, 31 im ersten Obergeschoss 10G, das heisst am dritten Kontrollpunkt KP3 im ersten Obergeschoss 10G an der Badewanne BW ein Austritt des Beschichtungsmaterials 541 festgestellt bzw. detektiert wird, werden wie in Fig. 8g gezeigt, alle Anschlüsse 3, 31, 4, 41, 32, 42 beider Teilsysteme 2, 21, 22 im ersten Obergeschoss 10G geschlossen und am vom Steigrohr V am weitesten entfernten Punkt, nämlich am Anschluss 42 der Toilette WC wird ein Vorratsbehälter 13 mit Beschichtungsmaterial 541 vorgesehen, völlig analog zur Vorgehensweise im zweiten Obergeschoss 20G zu Beginn des Beschichtungsprozesses.

Im zweiten Obergeschoss sind gemäss Fig. 8f immer noch, und bleiben im folgenden bis zum Ende des gesamten Beschichtungsverfahrens auch weiterhin alle Anschlüsse 3, 31, 4, 41, 32, 42 mit dem unter dem Beschichtungsüberdruck P₊₄ stehenden ersten Druckfluid 54 beaufschlagt.

Zur Beschichtung des zweiten Teilsystems 2, 22 im ersten Obergeschoss wird dann gemäss Fig. 8h zunächst der Anschluss 42 an der Toilette WC mit dem unter dem Beschichtungsüberdruck P₊₄ stehenden ersten Druckfluid 54 beaufschlagt, während der Anschluss 3, 31 an der Badewanne gesperrt ist und am Anschluss 4, 41, 32 zum Ansaugen des Beschichtungsmaterials 541 der Beschichtungsunterdruck P₋₄ anliegt.

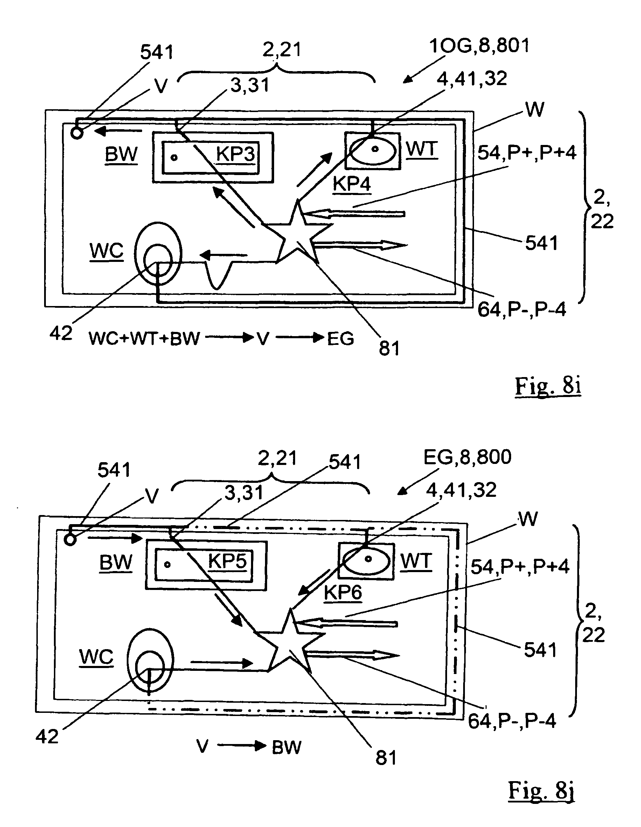

Sobald am Kontrollpunkt KP4 am Waschtisch im ersten Obergeschoss 10G Beschichtungsmaterial 541 aus dem Anschluss 4, 41, 32 austritt, werden gemäss Fig. 8i alle Anschlüsse 3, 31, 4, 41, 32, 42 mit dem unter dem Beschichtungsüberdruck P₊₄ stehenden ersten Druckfluid 54 beaufschlagt, so dass das Beschichtungsverfahren im Erdgeschoss EG fortgeführt werden kann.

Gemäss Fig. 8j sind im Erdgeschoss EG zunächst alle Anschlüsse 3, 31, 4, 41, 32, 42 beider Teilsystem 2, 21, 22 des Erdgeschosses EG mit dem unter dem Beschichtungsunterdruck P₋₄ stehenden zweiten Druckfluid 64 beaufschlagt, so dass das Beschichtungsmaterial über die Steigleitung V aus dem ersten Obergeschoss 10G bis zum Anschluss 3, 31 an der Badewanne BW des Erdgeschosses EG, wo ein fünfter Kontrollpunkt KP5 vorgesehen ist, angesaugt werden kann.

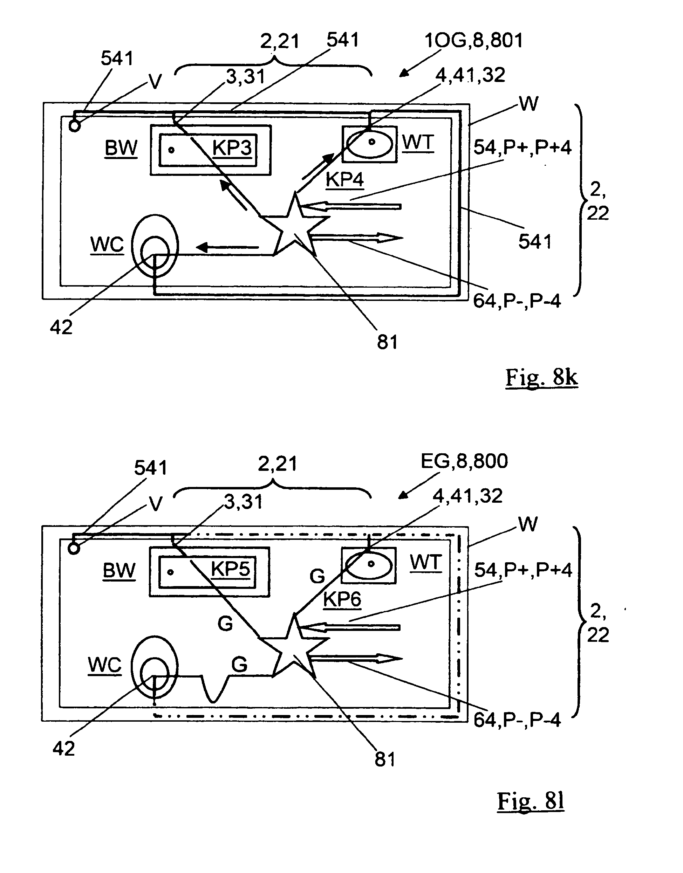

Im zweiten Obergeschoss 10G bleiben gemäss Fig. 8k alle Anschlüsse 3, 31, 4, 41, 32, 42 mit dem unter dem Beschichtungsüberdruck P₊₄ stehenden ersten Druckfluid 54 beaufschlagt. Sobald am Anschluss 3, 31 im Erdgeschoss EG, das heisst am fünften Kontrollpunkt KP5 im Erdgeschoss EG an der Badewanne BW ein Austritt des Beschichtungsmaterials 541 festgestellt bzw. detektiert wird, werden wie in Fig. 8l gezeigt, alle Anschlüsse 3, 31, 4, 41, 32, 42 beider Teilsysteme 2, 21, 22 im Erdgeschoss EG geschlossen und am vom Steigrohr V am weitesten entfernten Punkt, nämlich am Anschluss 42 der Toilette WC wird ein Vorratsbehälter 13 mit Beschichtungsmaterial 541 vorgesehen, völlig analog zur Vorgehensweise im ersten Obergeschoss 10G und im zweiten Obergeschoss 20G zu Beginn des Beschichtungsprozesses.

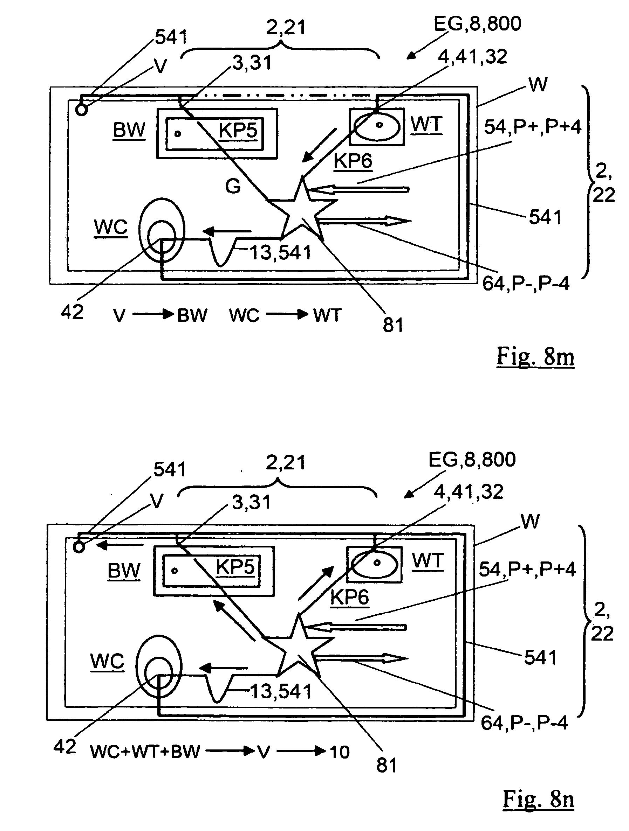

Zur Beschichtung des zweiten Teilsystems 2, 22 Erdgeschoss EG wird dann gemäss Fig. 8m zunächst der Anschluss 42 an der Toilette WC mit dem unter dem Beschichtungsüberdruck P₊₄ stehenden ersten Druckfluid 54 beaufschlagt, während der Anschluss 3, 31 an der Badewanne gesperrt ist und am Anschluss 4, 41, 32 zum Ansaugen des Beschichtungsmaterials 541 der Beschichtungsunterdruck P₋₄ anliegt.

Sobald am Kontrollpunkt KP6 am Waschtisch im ersten Obergeschoss 10G Beschichtungsmaterial 541 aus dem Anschluss 4, 41, 32 austritt, werden gemäss Fig. 8n alle Anschlüsse 3, 31, 4, 41, 32, 42 mit dem unter dem Beschichtungsüberdruck P₊₄ stehenden ersten Druckfluid 54 beaufschlagt, so dass das Beschichtungsverfahren im Erdgeschoss EG beendet werden kann.

Nach dem Beendigung des eigentlichen Beschichtungsprozesses wird für eine vorgegebene Zeitspanne, zum Beispiel für ca. 45 Minuten zum ausheizen eine Luftströmung im Rohrleitungssystem 1 mit einer vorgebbaren Temperatur, die bevorzugt bei 37°C oder höher liegt, aufrechterhalten. Sodann wird das erfindungsgemässe Beschichtungssystem demontiert und das Rohrleitungssystem muss für eine bestimmte Zeitspanne, z.B. während 24 Std. unter Umgebungsatmosphäre und unter Umgebungstemperatur aushärten. Anschliessend können alle Armaturen wieder montiert werden und das Rohrleitungssystem 1 wieder in Betrieb genommen werden.

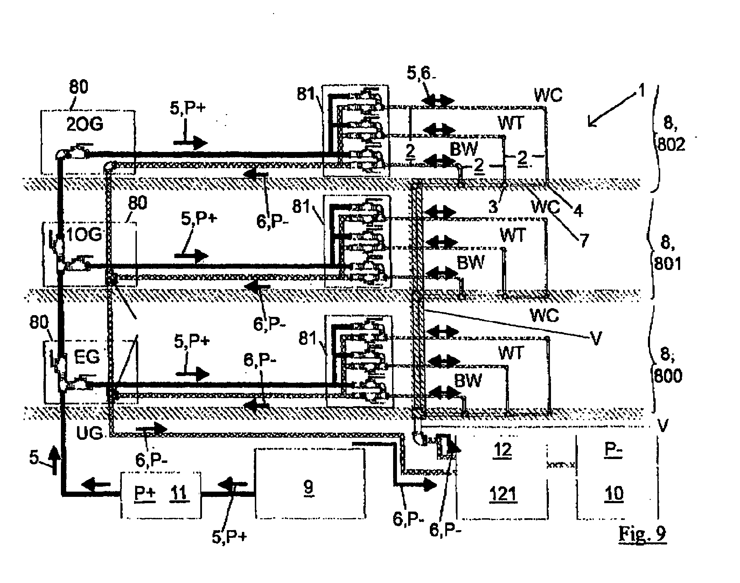

Zuletzt soll noch die erfindungsgemässe Bearbeitungsvorrichtung am Beispiel der Installation in einem viergeschossigen Gebäudes mit Untergeschoss UG, Erdgeschoss EG, erstem Obergeschoss 10G und zweitem Obergeschoss 20G schematisch anhand der Fig. 9 erläutert werden.

Ein spezielles Ausführungsbeispiel einer erfindungsgemässen Bearbeitungsvorrichtung gemäss Fig. 9 umfasst bevorzugt mehrere Subverteiler 81, die bevorzugt in der Nähe der Anschlüsse 3, 4 in den verschiedenen Nasszellen platziert sind, und dienen zur Bereitstellung des unter dem Überdruck P₊, stehenden ersten Arbeitsmediums 5 und des unter dem Unterdruck P₋ stehenden zweiten Arbeitsmediums 6 an einem Anschluss 3 eines Teilsystems 2 in einem Subsystem 8, 800, 801, 802 also hier auf einer der Etagen EG, 10G, 20G.

Das unter dem Überdruck P₊ stehende erste Arbeitsmedium 5 wird bevorzugt von einem Kompressor 9 bereitgestellt oder kann beispielsweise auch von einem Überdruckspeicher 9 bereitgestellt werden, wobei das unter dem Unterdruck P₋ stehende zweite Arbeitsmedium 6, von einer Absaugmaschine 10 oder einem Unterdruckspeicher 10 bereitgestellt wird.

Das erste Arbeitsmedium 5, wird dabei vom Kompressor über Druckleitungen an die Hauptverteiler 80, die hier Treppenhausverteiler 80 sind, geführt und von dort über eine Überdruck Verbindungsleitung an den zugeordneten Nasszellenverteiler angeliefert.

Analog wird das zweite Arbeitsmedium 6 von der Absaugmaschine über Unterdruckleitungen ebenfalls an die Treppenhausverteiler 80 geführt und von dort über eine Unterdruck Verbindungsleitung an den zugeordneten Nasszellenverteiler angeliefert.

Das heisst, bevorzugt sind die Hauptverteiler 80 und die Subverteiler 81 derart ausgebildet, dass über getrennte Unterdruck- und Überdruckkammern in den Verteilern das unter Überdruck stehende erste Arbeitsmedium 5 das unter Unterdruck stehende zweite Arbeitsmedium 6 gleichzeitig von ein und demselben Verteiler verteilt werden kann.

Es versteht sich, dass zur Verteilung auch Hauptverteiler 80 und / oder Subverteiler 81 vorgesehen werden können, die jeweils nur das unter dem Überdruck stehende erste Arbeitsmedium 5 oder nur das unter dem Unterdruck stehende zweite Arbeitsmedium 6 verteilen können.

Bevorzugt wird, wie der Fig. 9 entnommen werden kann, der Hauptverteiler 80 von einer Lufiregelstation 11 zur Einstellung und / oder Regulierung des Überdrucks P₊ des ersten Arbeitsmediums 5 im Betriebszustand gespeist.

Allein schon aus Gründen des Umweltschutzes ist gemäss Fig. 9 auch ein Wasserabscheider 12 und ein Zyklonabscheider 121 zur Abscheidung eines Fluids, insbesondere von Wasser, einem Öl, einem Epoxidharz und / oder zur Abscheidung von Partikeln, insbesondere von abrasiven Teilchen, im speziellen von Sand, und oder einem anderen umweltverträglichen oder nicht umweltverträglichen Material vorgesehen, wobei der Wasserabscheider 12 und der Zyklonabscheider 121 zwischen der Absaugmaschine 10 und dem Subverteiler 81 vorgesehen ist.

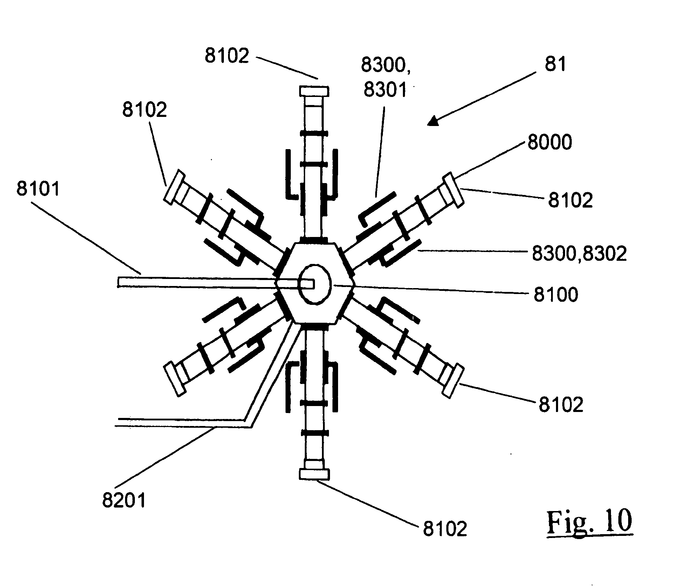

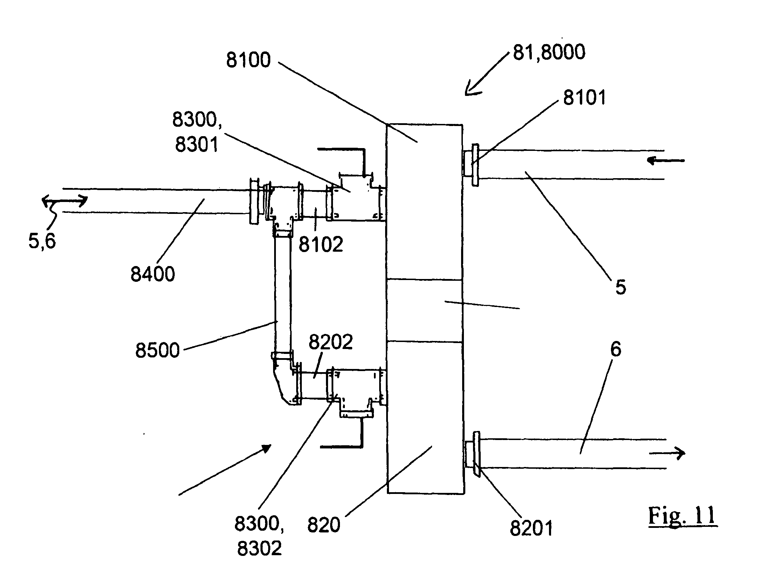

Die Fig. 10 und Fig. 11 zeigen schliesslich ein besonders bevorzugtes Ausführungsbeispiel eines erfindungsgemässen Subverteilers 81, der im Speziellen ein Nasszellenverteiler ist, und im folgenden im Detail beschrieben werden wird. Zum besseren Verständnis wird gleichzeitig auf die Fig. 11 verwiesen, die einen Schnitt durch eine Anschlussgruppe 8000 zeigt.

Der Subverteiler im Beispiel gemäss Fig. 10 umfasst eine Überdruckkammer 8100 mit einem Überdruckeinlass 8101 zur Beaufschlagung der Überdruckkammer 8100 mit einem unter einem Überdruck P₊, P₊₁, P₊₂. P₊₃, P₊₄ stehenden ersten Arbeitsmedium 5, 51, 52, 53, 54, sowie eine Unterdruckkammer 8200, die in der Aufsicht gemäss Fig. 10 hier nicht zu erkennen ist mit einem Unterdruckeinlass 8201 zur Beaufschlagung der Unterdruckkammer mit einem unter einem Unterdruck P₋, P₋₁, P₋₂, P₋₃, P₋₄ stehenden zweiten Arbeitsmedium 6, 61, 62, 63, 64.

Vorgesehen sind insgesamt sechs gleichberechtigte Anschlussgruppen 8000 zum Anschluss an ein Teilsystem 2, 21, 22 wie oben beschrieben. Jede Anschlussgruppe 800 umfasst einen Oberdruckauslass 8102 zur Bereitstellung des ersten Arbeitsmediums 5, 51, 52, 53, 54 an einem Anschluss 3, 31, 32, 4, 41, 42 eines Teilsystems 2, 21, 22 in einem Subsystem 8, 800, 801, 802, und einen Unterdruckauslass 8202 zur Bereitstellung des zweiten Arbeitsmediums 6, 61, 62, 63, 64 an einem Anschluss 3, 31, 32, 4, 41, 42 des Teilsystems 2, 21, 22 im Subsystem 8, 800 801, 802.

Dabei ist erfindungsgemäss eine Umschalteinrichtung 8300 vorgesehen, die im vorliegenden Beispiel durch mechanische Absperrhähne 8300, 8301, 8302 in Kombination mit einem gemeinsamen Auslassstutzen 8500 realisiert ist, wie am besten der Fig. 11 entnommen werden kann. Durch die erfindungsgemässe Umschalteinrichtung 8300 kann eine mit dem Subverteiler 81 verbundene Druckleitung 8400 wahlweise mit dem ersten Arbeitsmedium 5, 51, 52, 53, 54 oder mit dem zweiten Arbeitsmedium 6, 61, 62, 63, 64 beaufschlagt werden. Der Fachmann versteht, dass die in dieser Anmeldung beschriebenen Ausführungsbeispiele der Erfindung lediglich exemplarisch zu verstehen sind und je nach Anwendung auch in jeder geeigneten Weise kombinierbar sind und die einzelnen im Detail geschilderten Verfahrensschritte bzw. Systemkomponenten im Einklang mit der Erfindung in speziellen Ausführungsbeispielen auch fehlen können, oder in anderer Reihenfolge ablaufen bzw. zusammengesetzt sein können oder zum Beispiel auch durch weitere, nicht explizit beschriebene Schritte oder Komponenten ergänzt sein können.

Dabei liegen die zahlreichen Vorteile der Erfindung auf der Hand. Selbst wenn das erfindungsgemässe Verfahren nicht vollständig automatisiert ist, kann die gesamte Anlage nach der Installation praktisch von einem einzigen Bediener allein bedient werden. Das Strahlgut und vor allem das Beschichtungsmittel können quasi automatisch sehr exakt dosiert werden. Durch die beidseitige Sandstrahlung wird die Belastung der Rohre ca. auf die Hälfte reduziert, insbesondere an den Biegungen wird das gefürchtete Durchschiessen verhindert. Ausserdem hat sich das beidseitige Strahlen als viel effektiver erwiesen als das einseitige Strahlen, so dass sich zudem die Gesamtstrahlzeit verkürzt, wodurch letztlich auch Strahlgut eingespart wird. Die Zahl der Leitungen, die verlegt werden müssen ist stark reduziert und es kommt auch nicht mehr zu Verstopfungen in den Leitungen durch Strahlgut oder durch das Beschichtungsmaterial. Die Gerätschaften, wie Sandstrahlgerät usw. können zentral von einer einzigen Person bedient werden, so dass auch keine Gegensprecheinrichtungen für das Bedienpersonal mehr notwendig ist, und so Absprachen zwischen dem Bedienpersonal überflüssig werden, wodurch automatisch auch Fehler aufgrund von Kommunikationsfehlern ausgeschaltet sind.

## Patentansprüche

1. Beschichtungsverfahren zur Beschichtung eines Inneren eines Rohrleitungssystems (1) mit einem Beschichtungsmaterial (541), bevorzugt zur Beschichtung mit einem Epoxidharz (541), welches Rohrleitungssystem (1) ein Subsystem (8, 800, 801, 802) mit einem ersten Teilsystem (2, 21) zwischen einem ersten Anschluss (3, 31) des ersten Teilsystems (2, 21) und einem zweiten Anschluss (32) des ersten Teilsystems (2, 21) umfasst, und weiter ein zweites Teilsystem (2, 22) zwischen einem ersten Anschluss (4, 41) des zweiten Teilsystems (2, 22) und einem zweiten Anschluss (42) des zweiten Teilsystems (2, 22) umfasst, wobei der zweite Anschluss (32) des ersten Teilsystems (2, 21) und der erste Anschluss (4, 41) des zweiten Teilsystems (2, 22) identisch sind, so dass das Teilsystem (2, 21) und das zweite Teilsystem (2, 22) miteinander gekoppelt sind, und das Beschichtungsverfahren in einem ersten Verfahrensschritt die folgenden Schritte in beliebiger Reihenfolge umfasst
- Bereitstellung eines ersten Druckfluids (54), insbesondere Luft (54) welches erste Druckfluid (54) in Bezug auf einen Umgebungsdruck (P₀) unter einem Beschichtungsüberdruck (P₊₄) steht,
- Bereitstellung eines zweiten Druckfluids (64), insbesondere Luft (64), welches zweite Druckfluid (64) in Bezug auf den Umgebungsdruck (P₀) unter einem Beschichtungsunterdruck (P₋₄) steht,
- Bereitstellung des Beschichtungsmaterials (541) In einem Vorratsbehälter (13), insbesondere Vorratsschlauch (13),
- Verbinden eines Druckausgangs (131) des Vorratsbehälters (13) mit dem ersten Anschlusses (31) des ersten Teilsystems (21),
- Verbinden eines Druckeingangs des Vorratsbehälfiers (13) mit dem unter dem Beschichtungsüberdruck (P₊₄) stehenden ersten Druckfluid (54),
- Verbinden des zweiten Anschlusses (41) des ersten Teilsystems (21) mit dem unter dem Beschichtungsunterdruck (P₋₄) stehenden zweiten Druckfluid (64),
wobei in einem zweiten Verfahrensschritt das erste Teilsystem (21) über den ersten Anschluss (31) des ersten Teilsystems (21) mit dem unter dem Beschichtungsüberdruck (P₊₄) stehenden ersten Druckfluid (54) und über den zweiten Anschluss (41) des ersten Teilsystems gleichzeitig mit dem unter dem Beschichtungsunterdruck (P₋₄) stehenden zweiten Druckfluid (64) derart mit einem Differenzdruck beaufschlagt wird, dass zwischen dem ersten Anschluss (31) des ersten Teilsystems (21) und dem zweiten Anschluss (41) des ersten Teilsystems (21) in Richtung vom ersten Anschluss (31) zum zweiten Anschluss (41) ein Fluidstrom (7) aus dem Beschichtungsmaterial (541) und dem ersten Druckfluid (54) derart durch das erste Teilsystem (21) generiert wird, dass eine Innenwand des Teilsystems (21) mit dem Beschichtungsmaterial (541) beschichtet wird, **dadurch gekennzeichnet, dass** nachdem ein Austritt des Beschichtungsmaterials (541) aus dem zweiten Anschluss (41) des ersten Teilsystems (21) an einem Kontrollpunkt (KP, KP1, KP2, KP3, KP4, KP5, KP6) detektiert wird, der zweite Anschluss (41) des ersten Teilsystems mit dem unter dem Beschichtungsüberdruck (P₊₄) stehenden ersten Druckfluid (54) beaufschlagt wird, so dass das erste Teilsystem (2, 21) und das zweite Teilsystem (2, 22) nacheinander über den zweiten Anschluss (42) des zweiten Teilsystems (2, 22) mit Beschichtungsmaterial (541) beschickt wird.

2. Beschichtungsverfahren nach Anspruch 1, wobei das Rohrleitungssystem (1) ein vernetztes Rohdeitungssystem (1) mit mindestens zwei, bevorzugt über eine Vernetzungsleitung (V), insbesondere Steigrohr (V) oder Fallrohr (V), miteinander vernetzten Subsystemen (8, 800, 801, 802) ist, die bevorzugt jeweils mindestens ein Teilsystem (2, 21, 22) umfassen.

3. Beschichtungsverfahren nach einem der vorangehenden Ansprüche, wobei das Beschichtungsmittel (541) den Teilsystemen (2, 21, 22) eines gegebenen Subsystems (8, 800, 801, 802) an demjenigen Anschluss (3, 31, 32, 4, 41, 42) des Subsystems (8, 800, 801, 802) in das Subsystem (8, 800, 801, 802) eingespeist wird, welcher Anschluss (3, 31, 32, 4, 41, 42) am weitesten von einer dem Subsystem (8, 800, 801, 802) zugeordneten Vernetzungsleitung (V) entfernt ist.

4. Beschichtungsverfahren nach einem der vorangehenden Ansprüche, wobei der zweite Anschluss (42) des zweiten Teilsystems (22) mit dem unter dem Beschichtungsunterdruck (P₋₄) stehenden zweiten Druckfluid (64) beaufschlagt wird, bis ein Austritt des Beschichtungsmaterials (541) aus dem zweiten Anschluss (42) des zweiten Teilsystems (22) detektiert wird, und danach der zweite Anschluss (42) des zweiten Teilsystems (22) mit dem unter dem Beschichtungsüberdruck (P₊₄) stehenden ersten Druckfluid (54) beaufschlagt wird.

5. Beschichtungsverfahren nach einem der vorangehenden Ansprüche, wobei nach dem Beschichten aller Teilsysteme (2, 21, 22) eines ersten Subsystems (802) alle Anschlüsse (3, 31, 32, 4, 41, 42) mit dem unter dem Beschichtungsüberdruck (P₊₄) stehenden ersten Druckfluid (54) beaufschlagt werden und die mit dem Subsystem (802) verbundene Vernetzungsleitung (V), die bevorzugt mit dem unter dem Beschichtungsunterdruck (P₋₄) stehenden zweiten Druckfluid (64) an einer Saugseite beaufschlagt wird, mindestens so lange beschichtet wird, bis ein Austritt des Beschichtungsmaterials (541) aus der Vernetzungsleitung (V) an einem Kontrollpunkt (KP, KP3) detektiertwird.

6. Beschichtungsverfahren nach Anspruch 5 wobei das erste Subsystem (802) über die Vernetzungsleitung (V) mit einem weiteren Subsystem (801) verbunden ist, in weiche weiteren Subsystem (801) alle Anschlüsse (3, 31, 32, 4, 41, 42) des weiteren Subsystems (801) mit dem unter dem Beschichtungsunterdruck (P₋₄) stehenden zweiten Druckfluid (64) beaufschlagt werden, und die Vernetzungsleitung (V) solange beschichtet wird, bis an einem Kontrollpunkt (KP, KP3) ein Austritt des Beschichtungsmaterials (541) aus einem zweiten Anschluss (42) eines Teilsystems (21) des weiteren Subsystems (801) detektiert wird.

7. Beschichtungsverfahren nach einem der vorangehenden Ansprüche, wobei ein Detektionsmittel zur Detektion des Austritts des Beschichtungsmaterials (541) vorgesehen wird und das Detektionsmittel bevorzugt ein transparenter Schlauch und / oder ein Detektionssensor, insbesondere ein optischer, akustischer oder ein elektromagnetischer Detektionssensor ist.

8. Beschichtungsverfahren nach einem der vorangehenden Ansprüche, wobei das erste Druckfluid (54) und das zweite Druckfluid (64) über einen Hauptverteiler (80) einem Subverteiler (81) zur Verfügung gestellt wird.

9. Beschichtungsverfahren nach einem der vorangehenden Ansprüche, wobei vor dem Beschichtungsverfahren ein Bearbeitungsverfahren zur Bearbeitung eines Inneren eines Rohrleitungssystems (1) durchgeführt wird, welches Rohrleitungssystem (1) ein Teilsystem (2, 21, 22) zwischen einem ersten Anschluss (3, 31, 32) und einem zweiten Anschluss (4, 41, 42) umfasst, und das Bearbeitungsverfahren die folgenden Bearbeitungsschritte umfasst:
- Bereitstellung eines ersten Arbeitmediums (5, 51, 52, 53), welches in Bezug auf einen Umgebungsdruck (P₀) unter einem Überdruck (P₊, P₊₁, P₊₂, P₊₃) steht,
- Bereitstellung eines zweiten Arbeitsmediums (6, 61 , 62, 63), welches in Bezug auf den Umgebungsdruck (P₀) unter einem Unterdruck (P₋, P_{-1,} P₋₂, P₋₃) steht,
wobei das Teilsystem (2, 21, 22) zwischen dem ersten Anschluss (3, 31, 32) und dem zweiten Anschluss (4, 41, 42) gleichzeitig mit dem unter Überdruck (P₊, P₊₁, P₊₂, P₊₃) stehenden ersten Arbeitsmedium (5, 51, 52, 53) und dem unter dem Unterdruck (P₋₁, P₋₁, P₋₂, P₋₃) stehenden zweiten Arbeitsmedium (6, 61, 62, 63) derart beaufschlagt wird, dass zwischen dem ersten Anschluss (3, 31, 32) des Teilsystems (2) und dem zweiten Anschluss (4, 41, 42) des Teilsystems (2,21, 22) in einer Richtung ein Fluidstrom (7) des unter dem Überdruck (P₊, P_{+1,} P_{+2,} P₊₃) stehenden ersten Arbeitsmediums (5, 51, 52, 53) zu dem unter dem Unterdruck (P₋₁, P₋₁, P₋₂, P₋₃) stehenden zweiten Arbeitsmedium (6, 61, 62) durch das Teilsystem (2, 21, 22) generiert wird, **dadurch gekennzeichnet, dass** in mindestens einem Bearbeitungsschritt die Richtung des Fluidstroms (7) durch das Teilsystem (2, 21, 22) zwischen dem ersten Anschluss (3, 31, 32) und dem zweiten Anschluss (4, 41, 42) mindestens einmal umgekehrt wird.

10. Subverteiler, insbesondere Nasszellenverteiler zur Durchführung eines Beschichtungsverfahrens nach einem der vorangehenden Ansprüche, umfassend:
- eine Überdruckkammer (8100) mit einem Überdruckeinlass (8101) zur Beaufschlagung der Überdruckkammer (8100) mit einem unter einem Überdruck (P₊, P₊₁, P_{+2,} P₊₃, P₊₄) stehenden ersten Arbeitsmedium (52), wobei das erste Arbeitsmedium (5, 51, 52, 53, 54) ein ein Strahlmittel (521) umfassendes Strahlmedium (52) ist
oder wobei das erste Arbeitsmedium (52, 54) das das Beschichtungsmaterial (541) umfassende Druckfluid (54) ist;
- eine Unterdruckkammer (8200) mit einem Unterdruckeinlass (8201) zur Beaufschlagung der Unterdruckkammer mit einem unter einem Unterdruck (P_{-,} P_{-1,} P₋₂, P_{-3,} P₋₄) stehenden zweiten Arbeitsmedium, (6, 61, 62, 63, 64),
- einen Überdruckauslass (8102) zur Bereitstellung des ersten Arbeitsmediums (5, 51, 52, 53, 54) an einem Anschluss (3, 31, 32, 4, 41, 42) eines Teilsystems (2, 21, 22) in einem Subsystem (8, 800, 801, 802),
- einen Unterdruckauslass (8202) zur Bereitstellung des zweiten Arbeitsmediums (6, 61, 62, 63, 64) an einem Anschluss (3, 31, 32, 4, 41, 42) des Teilsystems (2, 21, 22) im Subsystem (8, 800 801, 802),
**dadurch gekennzeichnet, dass** eine Umschalteinrichtung (8300) vorgesehen ist, so dass eine mit dem Subverteiler (81) verbundene Druckleitung (8400) mit dem ersten Arbeitsmedium (5, 51, 52, 53, 54) und / oder mit dem zweiten Arbeitsmedium (6, 61, 62, 63, 64) beaufschlagbar ist.

11. Subverteiler nach Anspruch 10, wobei der Überdruckauslass (8102) und der Unterdruckauslass (8202) mit einem gemeinsamen Auslassstutzen (8500) verbunden sind, und wobei der Überdruckauslass (8102) und der Unterdruckauslass (8202) jeweils separat mit einem Absperrmittel (8300, 8301, 8302), insbesondere mit einem mechanischen Absperrhahn (8300, 8301, 8302), im speziellen mit einem automatischen Ventil (8300. 8301, 8302), bevorzugt mit einem elektrisch betätigbaren Ventil (8300, 8301, 8302) absperrbar ist.

12. Subverteiler nach einem der Ansprüche 10 oder 11, wobei ein Sensormittel zur Bestimmung einer Temperatur und / oder eines Drucks und / oder einer Schaltstellung eines Absperrmittels (8300, 8301, 8302) und / oder eines anderen Betriebsparameters des Subverteilers und / oder des ersten Arbeitsmediums (5, 51, 52. 53, 54) und / oder des zweiten Arbeitsmedium (6, 61, 62, 63, 64) am Subverteiler vorgesehen ist, und / oder wobei der Subverteiler derart ausgestaltet und mit elektrischen Anschlüssen versehen ist, dass ein Signal des Sensormittels in eine Steuerungsanlage einlesbar ist und / oder die Absperrmittel (8300, 8301, 8302) durch die Steuerungsanlage, bevorzugt automatisch und / oder programmgesteuert steuerbar sind.

13. Bearbeitungsvorrichtung zur Bearbeitung eines Rohrleitungssystems (1) gemäss einem Beschichtungsverfahren nach einem der Ansprüche 1 bis 9, wobei die Bearbeitungsvorrichtung einen Subverteiler (81) nach einem der Ansprüche 10 bis 12 zur Bereitstellung des unter dem Überdruck (P₊, P₊₁, P₊₂, P₊₃, P₊₄) stehenden ersten Arbeitsmediums (5, 51, 52, 53, 54) und des unter dem Unterdruck (P₋, P₋₁, P₋₂, P₋₃, P₋₄) stehenden zweiten Arbeitsmediums (6, 61, 62, 63, 64) an einem Anschluss (3, 31, 32, 4, 41, 42) eines Teilsystems (2, 21, 22) in einem Subsystem (8, 801, 802, 803) umfasst.

14. Bearbeitungsvorrichtung nach Anspruch 13, wobei zur Bereitstellung des ersten Arbeitsmediums (5, 51, 52, 53, 54) und / oder des zweiten Arbeitsmediums (6, 61, 62, 63, 64) am Subverteiler (81), ein mit dem Subverteiler in Strömungsverbindung stehender Hauptverteiler (80), insbesondere ein Treppenhausluftverkeiler (80) vorgehen ist und / oder wobei der Hauptverteiler (80) und / oder der Subverteiler (81) von einer Luftregelstation (11) zur Einstellung und oder Regulierung des Überdrucks (P₊, P_{+1,} P₊₂, P₊₃, P₊₄) des ersten Arbeitsmediums (5, 51, 52, 53, 54) im Betriebszustand gespeist ist.

## Claims

1. Coating process for the coating of an interior of a pipework system (1) with a coating material (541), preferably for the coating with an epoxy resin (541), which pipework system (1) includes a subsystem (8, 800, 801, 802) with a first part-system (2, 21) between a first connection (3, 31) of the first part-system (2, 21) and a second connection (32) of the first part-system (2, 21), and further including a second part-system (2, 22) between a first connection (4, 41) of the second part-system (2,22) and a second connection (42) of the second part-system (2, 22), wherein the second connection (32) of the first part-system (2, 21) and the first connection (4, 41) of the second part-system (2, 22) are identical, so that the part-system (2, 21) and the second part-system (2, 22) are coupled to each other, and the coating process includes in a first process step the following steps in an arbitrary order:
- providing a first pressure fluid (54), in particular air (54), which first pressure fluid (54) is under a coating over-pressure (P₊₄) with respect to an ambient pressure (P₀),
- providing a second pressure fluid (64), in particular air (64), which second pressure fluid (64) is under a coating low-pressure (P₋₄) with respect to the ambient pressure (P₀),
- providing the coating material (541) in a storage tank (13), in particular in a storage hose (13),
- connecting a pressure outlet (131) of the storage tank (13) with the first connection (31) of the first part-system (21),
- connecting a pressure inlet of the storage tank (13) with the first pressure fluid (54) being under the coating over-pressure (P₊₄),
- connecting the second connection (41) of the first part-system (21) with the second pressure fluid (64) being under the coating low-pressure (P₋₄),
wherein in a second process step the first part-system (21) is pressurized by a differential pressure by applying via the first connection (31) of the first part-system (21) the first pressure fluid (54) being under the coating over-pressure (P₊₄) and, at the same time, by applying via the second connection (41) of the first part-system the second pressure fluid (64) being under the coating low-pressure (P₋₄) in such a way that a fluid-flow (7) of the coating material (541) and the first pressure fluid (54) is established through the part-system (21) between the first connection (31) of the first part-system (21) and the second connection (41) of the first part-system (21) in a direction from the first connection (31) to the second connection (41) in such a way, that an inner surface of the part-system (21) is being coated by the coating material (541), **characterized in that** the second connection (41) of the first part system is pressurized with the first pressure fluid (54) being under the coating over-pressure (P₊₄) after a leaving of the coating material (541) out of the second connection (41) of the first part-system (21) at a checkpoint (KP, KP1, KP2, KP3, KP4, KP5, KP6) is detected, so that the first part-system (2, 21) and the second part-system (2, 22) are provided via the second connection (42) of the second part-system 82, 22) with coating material (541) one after the other.

2. Coating process in accordance with claim 1, wherein the pipework system (1) is a networked pipework system (1) including at least two networked sub-systems (8, 800, 801, 802), preferably being networked by means of a networking-pipe (V), in particular by an uptake pipe (V) or by a down pipe (V) and the networked sub-systems (8, 800, 801, 802) preferably including at least one part-system (2, 21, 22), respectively.

3. Coating process in accordance with anyone of the preceding claims, wherein the coating material (541) is provided to the part-systems (2, 21, 22) of a given sub-system (8, 800, 801, 802) by feeding it into the sub-system (8, 800, 801, 802) via that connection (3, 31, 32, 4, 41, 42) of the sub-system (8, 800, 801, 802), which connection (3, 31, 32, 4, 41, 42) has the biggest distance to a networking-pipe (V) being assigned to the sub-system (8, 800, 801, 802).

4. Coating process in accordance with anyone of the preceding claims, wherein the second connection (42) of the second part-system (22) is pressurized by the second pressure fluid (64) being provided under the coating low-pressure (P₋₄) until a leaving of the coating material (541) out of the second connection (42) of the second part-system (22) is detected, and after that, the second connection (42) of the second part-system (22) is pressurized by the first pressure fluid (54) being provided under the coating over-pressure (P₊₄).

5. Coating process in accordance with anyone of the preceding claims, wherein after the coating of all part-systems (2, 21, 22) of a first subsystem (802), all connections (3, 31, 32, 4, 41, 42) are pressurized by the first pressure fluid (54) being provided under the coating over-pressure (P₊₄), and the networking-pipe (V) being connected to the sub-system (802) is coated at least as long as a leaving of the coating material (541) out of the networking-pipe (V) is detected at a checkpoint (KP, KP3), wherein the networking-pipe (V) is preferably pressurized by the second pressure fluid (64) being provided under the coating low-pressure (P₋₄) at a suction side.

6. Coating process in accordance with claim 5, wherein the first sub-system (802) is connected to a further sub-system (801) via the networking-pipe (V), in which further sub-system (801) all connections (3, 31, 32, 4, 41, 42) of the further sub-system (801) are pressurized by the second pressure fluid (64) being provided under the coating low-pressure (P₋₄), and wherein the networking-pipe (V) is coated until a leaving of the coating material (541) out of a second connection (42) of a part-system (21) of the further sub-system (801) is detected at a checkpoint (KP, KP3).

7. Coating process in accordance with anyone of the preceding claims, wherein a detection means is be provided for the detection of the leaving of the coating material (541), and the detection means is preferably a transparent hose and / or a detection sensor, in particular an optic, acoustic or an electromagnetic detection sensor.

8. Coating process in accordance with anyone of the preceding claims, wherein the first pressure fluid (54) and / or the second pressure fluid (64) is provided to a sub-distributor (81) via a main-distributor (80).

9. Coating process in accordance with anyone of the preceding claims, wherein before starting the coating process a working process for the treatment of an interior of a pipework system (1) is carried out, which pipework system (1) includes a part-system (2, 21, 22) between a first connection (3, 31, 32) and a second connection (4, 41, 42), and the working process includes the following working steps:
- providing a first working fluid (5, 51, 52, 53) being under an over-pressure (P₊, P₊₁, P₊₂, P₊₃) with respect to an ambient pressure (P₀),
- providing a second working fluid (6, 61, 62, 63) being under a low-pressure (P₋, P₋₁, P₋₂, P₋₃) with respect to the ambient pressure (P₀),
wherein the part-system (2, 21, 22) is pressurized between the first connection (3, 31, 32) and the second connection (4, 41, 42) with the first working fluid (5, 51, 52, 53) provided under the over-pressure (P₊, P₊₁, P₊₂, P₊₃) and the second working fluid (6, 61, 62, 63) provided under the low-pressure (P₋, P₋₁, P₋₂, P₋₃) at the same time in such a way that a fluid-flow (7) of the first working fluid (5, 51, 52, 53) provided under the over-pressure (P₊, P₊₁, P₊₂, P₊₃) is established through the part-system (2, 21, 22) between the first connection (3, 31, 32) of the part-system (2) and the second connection (4, 41, 42) of the part-system (2, 21, 22) in a direction to the second working fluid (6, 61, 62, 63) provided under the low-pressure (P₋, P₋₁, P₋₂, P₋₃)
**characterized in that** in at least one working step the direction of the fluid-flow (7) through the part-system (2, 21, 22) between the first connection (3, 31, 32) and the second connection (4, 41, 42) is reversed at least once.

10. Sub-distributor, in particular an distributor for a plumbing unit for carrying out a coating process in accordance with anyone of the preceding claims, comprising:
- an over-pressure chamber (8100) having an over-pressure inlet (8101) for pressurizing the over-pressure chamber (8100) with a first working fluid (52) provided under an over-pressure (P₊, P₊₁, P₊₂, P₊₃, P₊₄), wherein the first working fluid (5, 51, 52, 53, 54) is a blasting means comprising a blasting medium (52) or wherein the first working medium (52, 54) is the coating material (541) comprising the pressure fluid (54).
- a low-pressure chamber (8200) having a low-pressure inlet (8201) for pressurizing the low-pressure chamber with a second working fluid (6, 61, 62, 63, 64) provided under a low-pressure (P₋, P₋₁, P₋₂, P₋₃, P₋₄)
- an over-pressure outlet (8102) for providing the first working fluid (5, 51, 52, 53,54) to a connection (3, 31, 32, 4, 41, 42) of a part-system (2, 21, 22) in a sub-system (8, 800, 801, 802),
- an low-pressure outlet (8202) for providing the second working fluid (6, 61, 62, 63, 64) to a connection (3, 31, 32, 4, 41, 42) of the part-system (2, 21, 22) in the sub-system (8, 800, 801, 802),
**characterized in that** a switching means (8300) is provided so that a pressure line (8400) being connected to the sub-distributor (81) can be pressurized with the first working fluid (5, 51, 52, 53, 54) and / or with the second working fluid (6, 61, 62, 63, 64).

11. Sub-distributor in accordance with claim 10, wherein the over-pressure outlet (8102) and the low-pressure outlet (8202) are connected to each other with a common outlet adaptor (8500), and wherein the over-pressure inlet (8102) and the low-pressure inlet (8202) can be separately closed off by means of an closing-off means (8300, 8301, 8302), respectively, in particular by means of an mechanical cut-off cock (8300, 8301, 8302), especially by means of an automatic valve (8300, 8301, 8302), preferably by means of an electrically operable valve (8300, 8301, 8302).

12. Sub-distributor in accordance with anyone of claims 10 or 11, wherein a sensor means is provided at the sub-distributor for determining a temperature and / or a pressure, and or a switch setting of a closing-off means (8300, 8301, 8302) and / or for determining an other operating parameter of the sub-distributor and / or for determining an operating parameter of the first working fluid (5, 51, 52, 53, 54) and / or of the second working fluid (6, 61, 62, 63, 64), and wherein the sub-distributor is designed and provided with electrical connections in such a way that a signal of the sensor means can be imported into a control system and / or wherein the closing-off means (8300, 8301, 8302) are controllable by the control system, in particular being automatiocally and / or program-controlled controllable.

13. Working equipment for the treatment of a pipework system (1) in accordance with a coating process of anyone of claims 1 to 9, wherein the working equipment includes a sub-distributor (81) in accordance with anyone of claims 10 to 12 for providing the first working fluid (5, 51, 52, 53, 54) being provided under the over-pressure (P₊, P₊₁, P₊₂, P₊₃, P₊₄) and the second working fluid (6, 61, 62, 63, 64) provided under the low-pressure (P₋, P₋₁, P₋₂, P₋₃, P₋₄) to a connection (3, 31, 32, 4, 41, 42) of a part-system (2, 21, 22) in a sub-system (8, 800, 801, 802, 803).

14. Working equipment in accordance with claim 13, wherein a main-distributor (80), in particular a staircase-air-distributor (80) being fluidly connected to the sub-distributor is provided for supplying the first working fluid (5, 51, 52, 53, 54) and / or for supplying the second working fluid (6, 61, 62, 63, 64) to the sub-distributor (81), and / or wherein for adjusting or controlling the over-pressure (P₊, P₊₁, P₊₂, P₊₃, P₊₄) of the first working fluid 5, 51, 52, 53, 54), the main-distributor and / or the sub-distributor is supplied by an air control station (11) in the operation state.

## Revendications

1. Procédé de revêtement pour l'application d'un matériau de revêtement (541) à l'intérieur d'un système de conduites (1), de préférence pour l'application d'une résine époxy (541), lequel système de conduites (1) comprend un sous-système (8, 800, 801, 802) avec un premier système partiel (2, 21) entre un premier raccord (3, 31) du premier système partiel (2, 21) et un deuxième raccord (32) du premier système partiel (2, 21), et également un deuxième système partiel (2, 22) entre un premier raccord (4, 41) du deuxième système partiel (3, 31) et un deuxième raccord (42) du deuxième système partiel (3, 31), le deuxième raccord (32) du premier système partiel (2, 21) et le premier raccord (4, 41) du deuxième système partiel (2, 22) étant identiques, de telle sorte que le système partiel (2, 21) et le deuxième système partiel (2, 22) sont couplés l'un à l'autre, et le procédé de revêtement comporte dans une première étape du procédé les étapes suivantes dans un ordre quelconque;
- mise à disposition d'un premier fluide sous pression (54), en particulier de l'air (54), lequel premier fluide sous pression (54) est en mis surpression de revêtement (P₊₄) par rapport à une pression atmosphérique (P₀),
- mise à disposition d'un deuxième fluide sous pression (64), en particulier de l'air (64), lequel deuxième fluide sous pression (64) est mis en dépression de revêtement (P₋₄) par rapport à la pression atmosphérique (P₀),
- mise à disposition du matériau de revêtement (541) dans une réserve d'alimentation (13), en particulier un tuyau flexible d'alimentation (13),
- liaison d'une sortie sous pression (131) de la réserve d'alimentation (13) avec le premier raccord (31) du premier système partiel (21),
- liaison d'une entrée sous pression de la réserve d'alimentation (13) avec le premier fluide sous pression (54) mis en surpression de revêtement (P₊₄),
- liaison du deuxième raccord (41) du premier système partiel (21) avec le fluide sous pression (64) mis en dépression de revêtement (P₋₄),
sachant que dans une deuxième étape du procédé, le premier système partiel (21), alimenté avec le premier fluide sous pression (54) mis en surpression de revêtement (P₊₄) par l'intermédiaire du premier raccord (31) du premier système partiel (21) et alimenté en même temps avec le deuxième fluide sous pression (64) mis en dépression de revêtement (P₋₄) par l'intermédiaire du deuxième raccord (41) du premier système partiel, est alimenté avec une différence de pression de telle sorte qu'entre le premier raccord (31) du premier système partiel (21) et le deuxième raccord (41) du premier système partiel (21), dans la direction du premier raccord (31) vers le deuxième raccord (41), il se forme un flux (7), formé par le matériau de revêtement (541) et le premier fluide sous pression (54), qui circule à travers le premier système partiel (21) de telle sorte qu'une paroi intérieure du système partiel (21) est revêtue avec le matériau de revêtement (541),
**caractérisé en ce que**, lorsque la sortie du matériau de revêtement (541) hors du deuxième raccord (41) du premier système partiel (21) est détectée en un point de contrôle (KP, KP1, KP2, KP3, KP4, KP5, KP6), le deuxième raccord (41) du premier système partiel est alimenté avec le premier fluide sous pression (54) mis en surpression de revêtement (P₊₄), de telle sorte que le premier système partiel (2, 21) et le deuxième système partiel (2, 22) sont alimentés l'un après l'autre avec le matériau de revêtement (541) par l'intermédiaire du deuxième raccord (42) du deuxième système partiel (2, 22).

2. Procédé de revêtement selon la revendication 1, dans lequel le système de conduites (1) est un système de conduites (1) en réseau avec au moins deux sous-systèmes (8, 800, 801, 802), qui sont reliés en réseau entre eux, de préférence, par une conduite de liaison (V), en particulier un tuyau de montée (V) ou un tuyau de descente (V), et qui comportent de préférence chacun au moins un système partiel (2, 21, 22) .

3. Procédé de revêtement selon l'une quelconque des revendications précédentes, dans lequel le matériau de revêtement (541) est introduit dans le sous-système (8, 800, 801, 802), à savoir dans les systèmes partiels (2, 21, 22) d'un sous-système (8, 800, 801, 802) donné, au niveau du raccord (3, 31, 32, 4, 41, 42) du sous-système (8, 800, 801, 802), lequel raccord (3, 31, 32, 4, 41, 42) est le plus éloigné d'une conduite de liaison en réseau (V) associée au sous-système (8, 800, 801, 802).

4. Procédé de revêtement selon l'une quelconque des revendications précédentes, dans lequel le deuxième raccord (42) du deuxième système partiel (22) est alimenté avec le deuxième fluide sous pression (64) en dépression de revêtement (P₋₄) jusqu'à ce que soit détectée une sortie du matériau de revêtement (541) hors du deuxième raccord (42) du deuxième système partiel (22), et ensuite le deuxième raccord (42) du deuxième système partiel (22) est alimenté avec le premier fluide sous pression (54) en surpression de revêtement (P₊₄).

5. Procédé de revêtement selon l'une quelconque des revendications précédentes, dans lequel à la suite du revêtement de tous les systèmes partiels (2, 21, 22) d'un premier sous-système (802), tous les raccords (3, 31, 32, 4, 41, 42) sont alimentés avec le premier fluide sous pression (54) en surpression de revêtement (P+₄) et la conduite de liaison en réseau (V), qui est reliée au sous-système (802) et qui est alimentée sur un côté d'aspiration, de préférence, avec le deuxième fluide sous pression (64) en dépression de revêtement (P-₄), est revêtue au moins jusqu'à ce qu'une sortie du matériau de revêtement (541) hors de la conduite de liaison en réseau (V) soit détectée au niveau d'un point de contrôle (KP, KP3).

6. Procédé de revêtement selon la revendication 5, dans lequel le premier sous-système (802) est relié via la conduite de liaison en réseau (V) avec un sous-système (801) supplémentaire, dans lequel sous-système (801) supplémentaire tous les raccords (3, 31, 32, 4, 41, 42) du sous-système (801) supplémentaire sont alimentés avec le deuxième fluide sous pression (64) en dépression de revêtement (P₋₄), et la conduite de liaison en réseau (V) est revêtue jusqu'a ce qu'au niveau d'un point de contrôle (KP, KP3) soit détectée la sortie du matériau de revêtement (541) hors d'un deuxième raccord (42) d'un système partiel (21) du sous-système (801) supplémentaire.

7. Procédé de revêtement selon l'une quelconque des revendications précédentes, dans lequel un moyen de détection est prévu pour détecter la sortie du matériau de revêtement (541), et le moyen de détection est de préférence un tuyau flexible transparente et/ou un capteur, en particulier un capteur optique, acoustique ou électromagnétique.

8. Procédé de revêtement selon l'une quelconque des revendications précédentes, dans lequel le premier fluide sous pression (54) et le deuxième fluide sous pression (64) sont mis à la disposition d'un sous-distributeur (81) par l'intermédiaire d'un distributeur principal (80).

9. Procédé de revêtement selon l'une quelconque des revendications précédentes, dans lequel, avant le procédé de revêtement, est mis en oeuvre un procédé de traitement pour le traitement de l'intérieur d'un système de conduites (1), lequel système de conduites (1) comprend un système partiel (2, 21, 22) entre un premier raccord (3, 31, 32) et un deuxième raccord (4, 41, 42), et le procédé de traitement comporte les étapes de traitement suivantes:
- mise à disposition d'un premier fluide de travail (5, 51, 52, 53), qui est mis en surpression (P₊, P₊₁, P₊₂, P₊₃) par rapport à une pression atmosphérique (P₀),
- mise à disposition d'un deuxième fluide de travail (6, 61, 62, 63), qui est mis en dépression (P-, P₋₁, P₋₂, P₋₃) par rapport à la pression atmosphérique (P₀),
sachant que le système partiel (2, 21, 22) entre le premier raccord (3, 31, 32) et le deuxième raccord (4, 41, 42) est alimenté en même temps avec le premier fluide de travail (5, 51, 52, 53) sous surpression (P₊, P₊₁, P₊₂, P₊₃) et avec le deuxième fluide de travail (6, 61, 62, 63) sous dépression (P-, P₋₁, P₋₂, P₋₃), de telle sorte qu'entre le premier raccord (3, 31, 32) du système partiel (2) et le deuxième raccord (4, 41, 42) du système partiel (2, 21, 22), il se forme dans un sens à travers le système partiel (2, 21, 22) un flux (7) du premier fluide de travail (5, 51, 52, 53) sous surpression (P₊, P₊₁, P₊₂, P₊₃) vers le deuxième fluide de travail (6, 61, 62) sous dépression (P-, P₋₁, P₋₂, P₋₃),
**caractérisé en ce que** dans au moins une étape de traitement, le sens du flux (7) à travers le système partiel (2, 21, 22) entre le premier raccord (3, 31, 32) et le deuxième raccord (4, 41, 42) est inversé au moins une fois.

10. Sous-distributeur, en particulier distributeur à cellules humides destiné à la mise en oeuvre d'un procédé de revêtement selon l'une des revendications précédentes, comportant:
- une chambre de surpression (8100) avec une entrée sous surpression (8101) pour l'alimentation de la chambre de surpression (8100) avec un premier fluide de travail (52) sous surpression (P₊, P₊₁, P₊₂, P₊₃, P₊₄), le premier fluide de travail (5, 51, 52, 53, 54) étant un fluide de grenaillage (52) contenant un agent de grenaillage (521),
ou le premier fluide de travail (52, 54) étant le fluide sous pression (54) contenant le matériau de revêtement (541);
- une chambre de dépression (8200) avec une entrée sous dépression (8201) pour l'alimentation de la chambre de dépression avec un deuxième fluide de travail (6, 61, 62, 63, 64) sous dépression (P-, P₋₁, P₋₂, P₋₃, P₋₄),
- une sortie sous surpression (8102) pour la mise à disposition du premier fluide de travail (5, 51, 52, 53, 54) au niveau d'un raccord (3, 31, 32, 4, 41, 42) d'un système partiel (2, 21, 22) dans un sous-système (8, 800, 801, 802),
- une sortie sous dépression (8202) pour la mise à disposition du deuxième fluide de travail (6, 61, 62, 63, 64) au niveau d'un raccord (3, 31, 32, 4, 41, 42) d'un système partiel (2, 21, 22) dans le sous-système (8, 800, 801, 802),
**caractérisé en ce qu'**il est prévu un dispositif de commutation (8300), de telle sorte qu'une conduite sous pression (8400), reliée au sous-distributeur (81), peut être alimentée avec le premier fluide de travail (5, 51, 52, 53, 54) et/ou avec le deuxième fluide de travail (6, 61, 62, 63, 64).

11. Sous-distributeur selon la revendication 10, dans lequel la sortie sous surpression (8102) et la sortie sous dépression (8202) sont reliées à une tubulure de sortie (8500) commune, et la sortie sous surpression (8102) et la sortie sous dépression (8202) pouvant être fermées séparément avec un organe d'arrêt (8300, 8301, 8302), en particulier avec un robinet d'arrêt (8300, 8301, 8302) mécanique, en particulier avec une vanne (8300, 8301, 8302) automatique, de préférence avec une vanne (8300, 8301, 8302) à commande électrique.

12. Sous-distributeur selon la revendication 10 ou 11, dans lequel un capteur destiné à déterminer une température et/ou une pression et/ou une position de commutation d'un organe d'arrêt (8300, 8301, 8302) et/ou un autre paramètre de service du sous-distributeur et/ou du premier fluide de travail (5, 51, 52, 53, 54) et/ou du deuxième fluide de travail (6, 61, 62, 63, 64) est prévu au niveau du sous-distributeur, et/ou dans lequel le sous-distributeur est configuré et muni de raccords électriques, de telle sorte qu'un signal du capteur peut être entré dans un dispositif de commande et/ou les organes d'arrêt (8300, 8301, 8302) peuvent être commandés par le dispositif de commande, de préférence automatiquement et/ou commandés par un programme.

13. Dispositif de traitement pour le traitement d'un système de conduites (1) selon un procédé de revêtement selon l'une des revendications 1 à 9, dans lequel le dispositif de traitement comprend un sous-distributeur (81) selon l'une des revendications 10 à 12, destiné à la mise à disposition du premier fluide de travail (5, 51, 52, 53, 54) sous surpression (P₊, P₊₁, P₊₂, P₊₃, P₊₄) et du deuxième fluide de travail (6, 61, 62, 63, 64) sous dépression (P-, P₋₁, P₋₂, P₋₃, P₋₄) au niveau d'un raccord (3, 31, 32, 4, 41, 42) d'un système partiel (2, 21, 22) dans un sous-système (8, 801, 802, 803).

14. Dispositif de traitement selon la revendication 13, dans lequel pour la mise disposition du premier fluide de travail (5, 51, 52, 53, 54) et/ou du deuxième fluide de travail (6, 61, 62, 63, 64) au niveau du sous-distributeur (81), il est prévu un distributeur principal (80), en particulier un distributeur d'air (80) de la cage d'escaliers, en liaison fluidique avec le sous-distributeur, et/ou dans lequel le distributeur principal (80) et/ou le sous-distributeur (81) sont alimentés en position de service par un poste de régulation d'air (11) destiné à régler ou à réguler la surpression (P₊, P₊₁, P₊₂, P₊₃, P₊₄) du premier fluide de travail (5, 51, 52, 53, 54).
